(19) Europäisches Patentamt
European Patent Office
Office européen des brevets

(11) **EP 3 362 488 B1**

(12) **EUROPÄISCHE PATENTSCHRIFT**

(45) Veröffentlichungstag und Bekanntmachung des Hinweises auf die Patenterteilung:
**22.09.2021 Patentblatt 2021/38**

(21) Anmeldenummer: **16802019.6**

(22) Anmeldetag: **23.11.2016**

(51) Int Cl.:
*C08F 2/22* *(2006.01)*          *C08F 283/12* *(2006.01)*
*C09D 151/08* *(2006.01)*        *C08F 290/06* *(2006.01)*
*C08F 290/14* *(2006.01)*

(86) Internationale Anmeldenummer:
**PCT/EP2016/078598**

(87) Internationale Veröffentlichungsnummer:
**WO 2017/089426 (01.06.2017 Gazette 2017/22)**

(54) **ORGANOCOPOLYMER-DISPERSIONEN**

ORGANOCOPOLYMER DISPERSIONS

DISPERSIONS DE COPOLYMÈRES ORGANIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2015 DE 102015223246**

(43) Veröffentlichungstag der Anmeldung:
**22.08.2018 Patentblatt 2018/34**

(73) Patentinhaber: **Wacker Chemie AG**
**81737 München (DE)**

(72) Erfinder:
• **SANDMEYER, Frank**
**84508 Burgkirchen (DE)**
• **ANDREWS, Amanda**
**Petersburg, Michigan 49270 (US)**
• **GREENE, James**
**Adrian, Michigan 49221 (US)**

(74) Vertreter: **Deffner-Lehner, Maria et al**
**Wacker Chemie AG**
**Zentralbereich Patente, Marken und Lizenzen**
**Hanns-Seidel-Platz 4**
**81737 München (DE)**

(56) Entgegenhaltungen:
WO-A1-01/42311          DE-A1-102005 000 824
DE-A1-102008 002 570    US-A- 5 618 879

• **QI D M ET AL: "Preparation of acrylate polymer/silica nanocomposite particles with high silica encapsulation efficiency via miniemulsion polymerization", POLYMER, ELSEVIER SCIENCE PUBLISHERS B.V, GB, Bd. 47, Nr. 13, 14. Juni 2006 (2006-06-14), Seiten 4622-4629, XP028060383, ISSN: 0032-3861, DOI: 10.1016/J.POLYMER.2006.04.024 [gefunden am 2006-06-14]**

**Beschreibung**

Die Erfindung betrifft Copolymerisate von ethylenisch ungesättigten Monomeren und ethylenisch funktionalisierten Siliconharzen in Form von wässrigen Dispersionen, deren Herstellung und Verwendung.

Siliconharze werden zur chemischen Modifizierung von organischen Polymeren oder als Bindemittel von Beschichtungen eingesetzt, um die Beständigkeit der Beschichtungen zum Beispiel gegen Witterungseinflüsse, chemischen Angriff und thermische Belastung zu erhöhen. Kommerziell erhältliche Produkte sind zum Beispiel Siliconpolyester aus Siliconharzen und organischen Polymeren, wie sie zur Herstellung von Metallbandbeschichtungen Einsatz finden. Diese Produkte werden vorzugsweise durch chemische Umsetzung und Bindungsbildung zwischen dem Siliconharz und dem organischen Polymer hergestellt. Eine chemische Anbindung der Siliconharze an das organische Polymer erfolgt dabei in der Regel unter Ausbildung einer Si-O-C-Brücke zwischen beiden, üblicherweise in einem Lösemittelprozess.

Für wässrige Medien kennt die Literatur verschiedene Produkte aus Kombinationen von organischen Polymeren mit Siliconharzen oder harzartigen oligomeren Siliconstrukturen und Verfahren zu deren Herstellung. EP 1 256 611 A2 und EP 1 197 502 A2 lehren beispielsweise die Herstellung einer wässrigen Harzemulsion durch radikalische Polymerisation ethylenisch ungesättigter organischer Monomere in Gegenwart von hydrolysierbaren und kondensationsfähigen Silanen, die nicht radikalisch polymerisierbar sind. EP 943 634 A1 beschreibt wässrige Latices zur Verwendung als Beschichtungsmittel, welche durch Copolymerisation von ethylenisch ungesättigten Monomeren in Gegenwart eines Silanolgruppen enthaltenden Siliconharzes hergestellt werden. Es bilden sich dabei interpenetrating networks (IPN) zwischen den Polymerketten und den Polysiloxanketten.

Die mit diesen Verfahren erhältlichen Siliconharz-Emulsionspolymerisate sowie die ansonsten hinreichend bekannten physikalischen Mischungen von Siliconharzemulsionen und organischen Polymerdispersionen zum Einsatz beispielsweise im Bereich der Siliconharzfassadenfarben, zeichnen sich dadurch aus, dass das Siliconharz und das organische Polymer nahezu ausschließlich in Form physikalischer Abmischungen vorliegen. Chemische Bindungen zwischen dem Siliconanteil und dem organischen Anteil bauen sich eher zufällig auf, wobei es sich dabei um hydrolyseanfällige Si-O-C-Bindungen handelt. Die Si-O-C-Bindung steht dabei stets in Konkurrenz zur Si-O-Si-Brückenbildung durch Kondensation der Silanolgruppen miteinander.

Alkoxyfunktionelle Silane oder Siloxanbausteine sind zwar niedrig kondensierte und niedrigviskose, leicht zu handhabende Synthesebausteine, allerdings sind die Kondensationsreaktionen der Silanbausteine oder ihrer hydrolysierten und teilweise kondensierten Oligomeren unter den hydrolytischen Bedingungen einer Emulsionspolymerisation nur unzureichend kontrollierbar. Es ist bekannt, dass vor allem Alkoxysilane mit kurzen sauerstoffgebundenen Alkylresten unter hydrolytischen Bedingungen eine ausgeprägte Neigung haben, bis hin zu festen Partikeln aufzukondensieren. Diese neigen zur Niederschlags- und Domänenbildung und damit zur Separation. Diese Neigung ist umso ausgeprägter, je mehr Alkoxygruppen am Silicium gebunden sind. In der Anwendung als Beschichtungsstoff kann sich dies in Form von Stippenbildung negativ auswirken. Die Produkte neigen dazu durch Separation ihre Lagerstabilität und Gebrauchsfähigkeit einzubüßen.

Eine definiertere Anbindung des Siliconbausteins mit dem organischen Polymer sollte über die Ausbildung von C-C-Bindungen durch Copolymerisation von doppelbindungsfunktionalisierten Siliconen mit organischen Monomeren erfolgen. Solche Ansätze mit linearen ethylenisch ungesättigten Polyorganosiloxanen werden in verschiedenen Schriften beschrieben. Beispielsweise lehrt EP 1 308 468 A1 hydrophob modifizierte Copolymerisate, die dadurch erhalten werden, dass lineare Silicone mit bis zu zwei polymerisierbaren Gruppen in Emulsion mit organischen Monomeren copolymerisiert werden. Einen ähnlichen Ansatz verfolgt EP 352 339 A1, in der vinylterminierte, lineare Polydimethylsiloxane mit (Meth)acrylatMonomeren copolymerisiert werden.

In EP 771 826 A2 wird die Emulsionspolymerisation von (Meth)acrylsäureestern und Vinylaromaten beschrieben, wobei zur Vernetzung difunktionelle acrylgruppen- oder vinylgruppenhaltige Silicone zugegeben werden. Auch US 5,618,879 A verfolgt diesen Ansatz und beschreibt reaktive wässrige Copolymerdispersionen, die allerdings auf Pfropfcopolymerisate eingeschränkt werden, gebildet aus Organopolysiloxanen mit zwei unterschiedlichen funktionellen Gruppen, von denen mindestens eine ethylenisch ungesättigt ist, mit ethylenisch ungesättigten Monomeren. Besagte Pfropfcopolymerisate werden durch radikalische Emulsionspolymerisation oder Microsuspensionspolymerisation der ethylenisch ungesättigten Monomeren in Gegenwart der funktionellen Organopolysiloxane erhalten. US 5,618,879 A lässt grundsätzlich sowohl lineare Polyorganosiloxane als auch Siliconharze zu, allerdings wird der Anteil an hochvernetzten Q-Segmenten in den Polyorganosiloxanedukten in US 5618879 auf unter 30% beschränkt.

Das bloße Vorhandensein des Siliconharzes während der radikalischen Polymerisation der organischen Monomeren bedeutet dabei allerdings nicht, dass auch tatsächlich eine chemische Bindung zwischen dem Silicon und dem sich bildenden organischen Polymer entsteht. Um dies zu verstehen, muss man sich die bekannten Mechanismen der radikalischen Polymerisationen in wässriger Umgebung genauer ansehen. Aufgrund der bekannten Unverträglichkeit zwischen Siliconpolymeren und organischen Polymeren ist die Annahme, dass sich ein zweiphasiges Produkt bildet, bestehend aus einer Siliconphase und einer organischen Polymerphase naheliegend, wobei zwischen beiden Phasen keine chemischen Bindungen bestehen. Wenn man insbesondere berücksichtigt, dass bei Standardverfahren der radikalischen Emulsionspolymerisationen die Polymerisationsreaktion der organischen Monomeren in der Wasserphase beginnt, wodurch sich weiter wachsende Mizellen bilden, die durch weiteres Monomer über die Wasserphase versorgt werden, scheint eine Copolymerisation zwischen einem hydrophoben, nicht wassergängigen Siliconoligomer oder Siliconpolymer auf dem Wege der regulären radikalischen Emulsionspolymerisation eher unwahrscheinlich, wenn nicht besondere Maßnahmen getroffen werden, die eine echte Copolymerisation erzwingen. Solche werden in den vorgenannten Schriften allerdings nicht ergriffen. Beim Standardverfahren der radikalischen Emulsionspolymerisation verarmen ansonsten die bei der Emulsionsherstellung primär gebildeten Emulsionströpfchen an organischem Monomer, bis schließlich nur noch das Silicon zurückbleibt, das nur noch mit sich selbst polymerisieren kann und so eine eigene Phase bildet. Wird eine solche Dispersion durch Verdunsten des Wassers aufgetrocknet, liegen eine Siliconphase und eine organische Polymerphase vor, die nicht miteinander verbunden sind. Da während des Polymerisationsprozesses eine Phasentrennung herbeigeführt wird, ist das Postulat interpenetrierender Netzwerke für Produkte, die auf diesem Wege erhalten werden willkürlich.

Geeignete Maßnahmen, die eine Copolymerisation zwischen dem Silicon und dem organischen Monomeranteil begünstigen oder herbeiführen, müssen auf alle Fälle eine ausschließliche oder überwiegende Polymerisation unter Einbezug eines Edukttransfers durch die Wasserphase ausschließen. Das heißt, es muss eine Polymerisation in den Edukt- bzw. Monomertröpfchen stattfinden, wie dies bei Suspensionspolymerisationen mit öllöslichen Initiatoren der Fall ist. Die Suspensionspolymerisation ist vor allem zur Herstellung von Vinylchloridpolymeren gebräuchlich. Die Suspensionspolymerisation führt zu deutlich größeren Teilchen als die Emulsionspolymerisation (Suspensionspolymerisation $\geq 50~\mu m$, Emulsionspolymerisation $< 1~\mu m$) und einer deutlich größeren Teilchengrößenverteilung. Außerdem werden bei der Suspensionspolymerisation geringere Molekülmassen erreicht als bei der Emulsionspolymerisation. Dadurch sind den Produkten der Suspensionspolymerisation andere Anwendungsfelder vorbehalten, als denen aus einer Emulsionspolymerisation.

Um in der Suspensionspolymerisation, die von ihrem Ablauf als eine Substanzpolymerisation in Wasser gesehen werden kann, zu kleineren Teilchengrößen zu gelangen, gibt es die Möglichkeit der Microsuspensionspolymerisation, die Teilchengrößen von $\geq 1~\mu m$ gestattet, verbunden mit der für Suspensionspolymerisate zu erwartenden breiten Teilchengrößenverteilung und damit bereits in den oberen Bereich der Emulsionspolymerisation vordringt. Kleinere Teilchengrößen mit enger Verteilung sind dann nur noch mittels der Emulsionspolymerisation möglich.

Kleinteilige Copolymerdispersionen von Partikeln und Siliconen einschließlich Siliconharzen mit organischen Polymeren, die durch radikalische Polymerisation hergestellt werden, lehrt US 7,674,868 B2. Hierbei wird die Copolymerisation zwischen dem Siliconharz und dem organischen Polymeranteil in einer Miniemulsionspolymerisation erreicht. Es werden Teilchengrößen im Bereich weniger 100 nm erzielt. Das organische Monomer wird in Gegenwart des olefinisch ungesättigten Siliconharzes polymerisiert. Eine Kombination aus wasserlöslichen und öllöslichen Initiatoren sorgt dafür, dass sowohl in den Monomertröpfchen als auch in der Wasserphase polymerisiert wird. Es ist dabei ein besonderes Kennzeichen der Erfindung gemäß US 7,674,868 B2, dass sie nur dann funktioniert, wenn die olefinisch ungesättigte Funktion an dem Siliconharzen durch die Verwendung der speziellen Klasse der alpha-Silane erreicht wird, die eine Kohlenstoffgruppe mit genau einem C-Atom zwischen dem Siliciumatom und dem organofunktionellen Rest besitzen. Alpha-Silane besitzen ein anderes Reaktionsverhalten als Silane mit längeren Spacern zwischen dem Siliciumatom und der organofunktionellen Gruppen. Auch in diesem Fall wurde von der Sonderstellung dieser Gruppe Gebrauch gemacht, um die Zielprodukte herzustellen. Aufgrund der höheren Reaktivität vor allem siliciumgebundener Alkoxygruppen von alpha-Silanen, ist mit einer begrenzten Lagerstabilität in wässriger Umgebung zu rechnen. Nachteilig ist dabei außerdem, dass ethylenisch ungesättigte alpha-Silane deutlich teurer sind als Silane mit längeren Spacergruppen zwischen der organischen Funktion und dem Siliciumatom, was auch die Herstellungskosten für die entsprechenden Siliconharze in die Höhe treibt. Der breiten Umsetzung der Erfindung gemäß US 7,674,868 B2 stehen daher sowohl technische als auch wirtschaftliche Gründe entgegen. Es ist bis heute kein Produkt am Markt bekannt, das die Technologie gemäß US 7,674,868 B2 nutzt.

Aufgabe der vorliegenden Erfindung war es, den Stand der Technik dahingehend zu verbessern, dass stabile, insbesondere lagerstabile, feinteilige Siliconharz-Organocopolymere in Form ihrer wässrigen Dispersionen, bereitgestellt werden, bei denen das Siliconharz an den organischen Polymeranteil gebunden vorliegt, wobei es sich um eine hydrolysestabile Si-C-Bindung handelt, und die Copolymeren aus gut verfügbaren und wirtschaftlich günstigen Rohstoffen zugänglich sind. Weiterhin bestand die Aufgabe, lagerstabile, feinteilige Siliconharz-Organocopolymere in Form ihrer wässrigen Dispersionen, bereitzustellen, die sich dadurch auszeichnen, dass sie sowohl auf mineralischen Substraten als auch auf Holzsubstraten sowohl als Bindemittel für poröse als auch für filmbildende Beschichtungen einsetzbar sind, dabei sowohl das Spreiten von Wasser auf ihrer Oberfläche für eine rasche Verdunstung desselben zulassen als auch gleichzeitig das Wasserrückhaltevermögen der Beschichtungen erhöhen, also das Eindringen von Wasser in das Substrat durch Penetration durch die Beschichtung verhindern, wobei diese Eigenschaftskombination mit einem Auftrag nur einer Art von Beschichtungsmittel erreichbar ist.

Die Aufgabe wird durch die Erfindung gelöst.

Gegenstand der Erfindung sind wässrige Dispersionen von Copolymerisaten von ethylenisch ungesättigten Monomeren und von ethylenisch funktionalisierten Siliconharzen erhältlich mittels radikalisch initiierter Miniemulsionspolymerisation in wässrigem Medium von

(A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von

(B) mindestens einem Siliconharz, welches mit ethylenisch ungesättigten, radikalisch polymerisierbaren Gruppen funktionalisiert ist und aus Siloxaneinheiten der allgemeinen Formel

$$[R^1_p(OR^2)_zSiO_{(4-p-z)/2}] \qquad (I)$$

besteht,

wobei $R^1$ gleich oder verschieden ist und einen Rest **R\*** oder **E** bedeutet, wobei

**R\*** gleich oder verschieden ist, ein Wasserstoffatom, oder einen von aliphatischen C-C-Mehrfachbindungen freien Kohlenwasserstoffrest mit 1 bis 18 C-Atomen, vorzugsweise einen $C_1$-$C_{18}$-Alkyl-, $C_6$-$C_{18}$-Cycloalkyl- oder $C_6$-$C_{18}$-Arylrest, welcher gegebenenfalls substituiert sein kann, bedeutet, bevorzugt R\* mindestens zwei verschiedene von aliphatischen C-C-Mehrfachbindungen freie Kohlenwasserstoffreste mit 1 bis 18 C-Atomen sind, bedeutet, und
**E** einen ethylenisch ungesättigten Rest der Formel $-(CH_2)_3-X$, bedeutet, wobei

$R^2$ gleich oder verschieden ist, und ein Wasserstoffatom oder einen Kohlenwasserstoffrest mit 1 bis 18 C-Atomen, vorzugsweise einen $C_1$-$C_{18}$-Alkyl- oder $C_6$-$C_{18}$-Cycloalkylrest, bedeutet,
X eine ethylenisch ungesättigte organische Gruppe bedeutet, wobei $R^1$ in mindestens 1 Mol-% und höchstens 50 Mol-% aller Siloxaneinheiten (I) einen ethylenisch ungesättigten Rest E bedeutet,
p 0, 1, 2 oder 3 ist und z 0, 1, 2, oder 3 ist,
wobei die Summe p + z den Wert 0, 1, 2 oder 3 aufweist,
mit der Maßgabe, dass bei mindestens 20 Mol-%, vorzugsweise bei mindestens 30 Mol-%, aller Siloxaneinheiten der Formel (I) im Siliconharz (B) die Summe p+z 1 oder 0 ist, wobei p 1 oder 0 und z 0 ist,
wobei für mindestens 40 Mol-% aller Siloxaneinheiten der Formel (I) gilt p = 1 und z = 0 (T-Einheiten) und wenn D-Einheiten vorhanden sind, das Mol-Verhältnis von T/D-Einheiten größer 50/50 ist,
und mit der Maßgabe, dass die Reste R\* mindestens zwei verschiedene Reste sind ausgewählt aus der Gruppe der kohlenstoffreicheren Kohlenwasserstoffreste mit 6 bis 18 C-Atomen und der kohlenstoffärmeren Reste mit 1 bis 3 C-Atomen,

wobei die Miniemulsionspolymerisation durchgeführt wird, indem im ersten Schritt eine Lösung aus mindestens einem Siliconharz (B) in einem oder mehreren ethylenisch ungesättigten Monomeren (A) hergestellt wird, wobei eine Siliconharz-in-Monomer-Lösung erhalten wird,
im zweiten Schritt die so erhaltene Siliconharz-in-Monomer-Lösung unter Verwendung von Emulgatoren, ggf. hydrophoben Coemulgatoren, und ggf. Polymerisationsinhibitoren, die die vorzeitige radikalische Emulsionspolymerisation verhindern, in Wasser so emulgiert wird, dass eine Miniemulsion mit einer Teilchengröße D(50) von höchstens 350 nm, vorzugsweise höchsten 300 nm, bevorzugt höchstens 250 nm, besonders bevorzugt höchstens 200 nm, erhalten wird, und
im dritten Schritt die so erhaltene Miniemulsion einer radikalischen Emulsionspolymerisation unterworfen wird, wobei zur Durchführung der Miniemulsionspolymerisation wasserlösliche oder öllösliche oder eine Mischung von wasserlöslichen und öllöslichen Polymerisationsinitiatoren verwendet werden.

Gegenstand der Erfindung sind weiterhin ein Verfahren zur Herstellung von wässrige Dispersionen von Copolymerisaten von ethylenisch ungesättigten Monomeren und von ethylenisch funktionalisierten Siliconharzen mittels radikalisch initiierter Miniemulsionspolymerisation in wässrigem Medium von

(C) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren, in Gegenwart von

(D) mindestens einem Siliconharz, welches mit ethylenisch ungesättigten, radikalisch polymerisierbaren Gruppen funktionalisiert ist und aus Siloxaneinheiten der allgemeinen Formel

$$[R^1{}_p(OR^2)_zSiO_{(4-p-z)/2}] \qquad (I)$$

besteht,

wobei $R^1$ gleich oder verschieden ist und einen Rest **R*** oder **E** bedeutet, wobei

**R*** gleich oder verschieden ist, ein Wasserstoffatom, oder einen von aliphatischen C-C-Mehrfachbindungen freien Kohlenwasserstoffrest mit 1 bis 18 C-Atomen, vorzugsweise einen $C_1$-$C_{18}$-Alkyl-, $C_6$-$C_{18}$-Cycloalkyl- oder $C_6$-$C_{18}$-Arylrest, welcher gegebenenfalls substituiert sein kann, bedeutet, bevorzugt R* mindestens zwei verschiedene von aliphatischen C-C-Mehrfachbindungen freie Kohlenwasserstoffreste mit 1 bis 18 C-Atomen sind, bedeutet, und

**E** einen ethylenisch ungesättigten Rest der Formel $-(CH_2)_3$-X, bedeutet, wobei

$R^2$ gleich oder verschieden ist, und ein Wasserstoffatom oder einen Kohlenwasserstoffrest mit 1 bis 18 C-Atomen, vorzugsweise einen $C_1$-$C_{18}$-Alkyl- oder $C_6$-$C_{18}$-Cycloalkylrest, bedeutet,

X eine ethylenisch ungesättigte organische Gruppe bedeutet, wobei $R^1$ in mindestens 1 Mol-% und höchstens 50 Mol-% aller Siloxaneinheiten (I) einen ethylenisch ungesättigten Rest E bedeutet,

p 0, 1, 2 oder 3 ist und z 0, 1, 2, oder 3 ist,

wobei die Summe p + z den Wert 0, 1, 2 oder 3 aufweist,

mit der Maßgabe, dass bei mindestens 20 Mol-%, vorzugsweise bei mindestens 30 Mol-%, aller Siloxaneinheiten der Formel (I) im Siliconharz (B) die Summe p+z 1 oder 0 ist, wobei p 1 oder 0 und z 0 ist,

wobei für mindestens 40 Mol-% aller Siloxaneinheiten der Formel (I) gilt p = 1 und z = 0 (T-Einheiten) und wenn D-Einheiten vorhanden sind, das Mol-Verhältnis von T/D-Einheiten größer 50/50 ist,

und mit der Maßgabe, dass die Reste R* mindestens zwei verschiedene Reste sind ausgewählt aus der Gruppe der kohlenstoffreicheren Kohlenwasserstoffreste mit 6 bis 18 C-Atomen und der kohlenstoffärmeren Reste mit 1 bis 3 C-Atomen,

wobei die Miniemulsionspolymerisation durchgeführt wird, indem im ersten Schritt eine Lösung aus mindestens einem Siliconharz (B) in einem oder mehreren ethylenisch ungesättigten Monomeren (A) hergestellt wird, wobei eine Siliconharz-in-Monomer-Lösung erhalten wird,

im zweiten Schritt die so erhaltene Siliconharz-in-Monomer-Lösung unter Verwendung von Emulgatoren, ggf. hydrophoben Coemulgatoren, und ggf. Polymerisationsinhibitoren, die die vorzeitige radikalische Emulsionspolymerisation verhindern, in Wasser so emulgiert wird, dass eine Miniemulsion mit einer Teilchengröße D(50) von höchstens 350 nm, vorzugsweise höchsten 300 nm, bevorzugt höchstens 250 nm, besonders bevorzugt höchstens 200 nm, erhalten wird, und

im dritten Schritt die so erhaltene Miniemulsion einer radikalischen Emulsionspolymerisation unterworfen wird, wobei zur Durchführung der Miniemulsionspolymerisation wasserlösliche oder öllösliche oder eine Mischung von wasserlöslichen und öllöslichen Polymerisationsinitiatoren verwendet werden.

Die erfindungsgemäßen wässrigen Dispersionen von Copolymerisaten können anschließend einer Trocknung unterworfen werden, wobei redispergierbare Polymerpulver erhalten werden.

Gegenstand der Erfindung sind weiterhin wässrige Baubeschichtungsmittel enthaltend die erfindungsgemäßen wässrigen Dispersionen von Copolymerisaten, wobei als Siliconharze (B) vorzugsweise solche eingesetzt werden, die zu mindestens 20 Mol-%, bevorzugt mindesten 30 Mol-%, aus T-Einheiten und/oder Q-Einheiten aufgebaut sind, wobei T-Einheiten Siloxaneinheiten der Formel (I) mit p gleich 1 und z gleich 0 sind und Q-Einheiten Siloxaneinheiten der Formel (I) mit p gleich 0 und z gleich 0 sind.

Die erfindungsgemäße wässrige siliconharzhaltige Organocopolymerdispersion wirkt in dem Baubeschichtungsmittel als Bindemittel. Dabei wird eine synergistische Verstärkung der Eigenschaften des organischen Polymers und des siliciumbasierenden Anteils beobachtet. Das heißt, man findet typischerweise neben hohem Bindevermögen und hochwertigen mechanischen Eigenschaften des Polymers, die Beständigkeitseigenschaften des Siliciumteils. Insbesondere zeichnen sich die erfindungsgemäßen Baubeschichtungsmittel dadurch aus, dass sie Beschichtungen mit signifikant verbessertem Antiblockverhalten und damit verringerter Verschmutzungsneigung ergeben. Außerdem erlauben sie eine gezielte Einstellung und Abstimmung der Eigenschaften Oberflächenhydrophobie und Oberflächenhydrophilie, die überraschender Weise stets mit einer guten Wasserblockadewirkung gekoppelt beobachtet wird. Es gelingt also mit Hilfe dieser Bindemittel Beschichtungssysteme zu erzeugen, die in einem Einschichtauftrag eine Beschichtung ergeben, die sowohl eine gute Sperrwirkung gegen den Durchtritt von Wasser ergeben als auch eine ausreichend hydrophile Oberfläche, die das Spreiten von Wasser zu einem Film erlaubt. Es ist allgemein bekannt, dass dünne Filme von Wasser schneller verdunsten als die sich auf hydrophoben Oberflächen ausbildenden Wassertröpfchen. Daher sind Beschichtungen, die unter Verwendung der erfindungsgemäßen Siliconharz-Organocopolymer-Dispersionen erhalten werden, im Durchschnitt trockener als rein hydrophobe oder rein hydrophile Beschichtungen. Durch letztere kann Wasser in die beschichtete Oberfläche eindringen und so zu einer Befeuchtung des Baustoffes führen. Da die entsprechenden Beschichtungen durch einen einzigen Auftragsvorgang erzielt werden und nicht erst eine hydrophobe, wassersperrende Beschichtung und danach eine hydrophile, das Wasser spreitende Beschichtung benötigen, zeichnen sich erfindungsgemäße Siliconharz-Organocopolymer-Dispersionen durch besondere Wirtschaftlichkeit in der Anwendung aus. Falls eine sowohl wassersperrende als auch oberflächenhydrophobe Beschichtung gewünscht ist, kann diese durch entsprechende Zugabe eines hydrophobierenden Additivs erreicht werden. Beispielsweise kann dabei eine Additivierung mit einem Siliconharz vorgenommen werden, das den erfindungsgemäß zur Copolymerisation eingesetzten entspricht, wobei hier die ethylenisch ungesättigte Funktion verzichtbar ist, d.h. auf die Anbringung der ethylenisch ungesättigten Funktion kann bei der Herstellung des zur hydrophoben Additivierung eingesetzten Siliconharzes verzichtet werden. Das hat den Vorteil, dass diese Siliconharze über ggf. vorhandene Alkoxy- oder Hydroxygruppen mit den entsprechenden Funktionalitäten der am Copolymer gebundenen und für die Copolymersynthese nicht benötigten Alkoxy- und Hydroxyfunktionen chemische Wechselwirkungen eingehen können und so dauerhaft in der Oberfläche verankert vorliegen.

Im Unterschied zu Baubeschichtungsmitteln, die nur physikalisch eingemischtes Siliconharz enthalten, treten in Baubeschichtungsmitteln durch die Siliconharze und die organischen Polymere der erfindungsgemäßen Siliconharz-Organocopolymer-Dispersionen keine Unverträglichkeiten, inhomogene Verteilungen oder nachträgliche Phasentrennung auf.

Des Weiteren werden die von Baubeschichtungen stets erwarteten Eigenschaften, wie hohe Lagerungs- und Bewitterungsstabilität und Langlebigkeit gefunden.

Mit den erfindungsgemäßen Siliconharz-Copolymer-Dispersionen können sowohl filmbildende als auch poröse Beschichtungen realisiert werden, abhängig davon wie die Pigmentvolumenkonzentration der Formulierung gewählt wird.

Durch das Einpolymerisieren von Silanen, die hydrolysierbare und kondensierbare Gruppen enthalten, in das Copolymer, lassen sich Bindemittel herstellen, die nach dem Auftrag feuchtigkeitshärtend sind, so dass sich die Filmhärten, die Thermoplastizität und die Verschmutzungsneigung einstellen lassen.

Die erfindungsgemäßen Baubeschichtungsstoffe können sowohl auf mineralischen Substraten als auch auf Holz eingesetzt werden.

Als ethylenisch ungesättigte Monomere (A) werden Vinylester, vorzugsweise solche von Carbonsäuren mit 1 bis 15 C-Atomen, eingesetzt. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise VeoVa9® oder VeoVa10® (Handelsnamen der Firma Resolution). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat. Besonders bevorzugt sind Methylacrylat, Methylmethacrylat, n-Butylacrylat, iso-Butylacrylat, t-Butylacrylat, 2-Ethylhexylacrylat, und Norbornylacrylat.

Als Vinylaromaten bevorzugt sind Styrol, alpha-Methylstyrol, die isomeren Vinyltoluole und Vinylxylole sowie Divinylbenzole. Besonders bevorzugt ist Styrol.

Unter den Vinylhalogenverbindungen sind Vinylchlorid, Vinylidenchlorid, ferner Tetrafluorethylen, Difluorethylen, Hexylperfluorethylen, 3,3,3-Trifluorpropen, Perfluorpropylvinylether, Hexafluorpropylen, Chlortrifluorethylen und Vinylfluorid zu nennen. Besonders bevorzugt ist Vinylchlorid. Ein bevorzugter Vinylether ist beispielsweise Methylvinylether.

Die bevorzugten Olefine sind Ethen, Propen, 1-Alkylethene sowie mehrfach ungesättigte Alkene, und die bevorzugten Diene sind 1,3-Butadien und Isopren. Besonders bevorzugt sind Ethen und 1,3-Butadien.

Gegebenenfalls können noch 0,1 bis 5 Gew.-% Hilfsmonomere, bezogen auf das Gesamtgewicht der Monomeren (A), copolymerisiert werden. Bevorzugt werden 0,5 bis 2,5 Gew.-% Hilfsmonomere eingesetzt. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid wie Diacetonacrylamid (DAAM) und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Genannt seien auch Monomere mit Hydroxy- oder CO-Gruppen, beispielsweise Methacrylsäure- und Acrylsäurehydroxyalkylester, wie Hydroxyethyl-, Hydroxypropyl- oder Hydroxybutylacrylat oder - methacrylat sowie Verbindungen wie Diacetonacrylamid und Acetylacetoxyethylacrylat oder -methacrylat.

Besonders bevorzugt sind als Comonomere (A) ein oder mehrere Monomere aus der Gruppe Vinylacetat, Vinylester von $\alpha$-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol und 1,3-Butadien. Besonders bevorzugt sind als Comonomere (A) auch Gemische von Vinylacetat und Ethylen; Gemische von Vinylacetat, Ethylen und einem Vinylester von $\alpha$-verzweigten Monocarbonsäuren mit 9 bis 11 C-Atomen; Gemische von n-Butylacrylat und 2-Ethylhexylacrylat und/oder Methylmethacrylat; Gemische von Styrol und einem oder mehreren Monomeren aus der Gruppe Methylacrylat, Ethylacrylat, Propylacrylat, n-Butylacrylat, 2-Ethylhexylacrylat; Gemische von Vinylacetat und einem oder mehreren Monomeren aus der Gruppe Methylacrylat, Ethylacrylat, Propylacrylat, n-Butylacrylat, 2-Ethylhexylacrylat und gegebenenfalls Ethylen; Gemische von 1,3-Butadien und Styrol und/oder Methylmethacrylat; wobei die genannten Gemische gegebenenfalls noch ein oder mehrere der obengenannten Hilfsmonomere enthalten können.

Die Monomerauswahl bzw. die Auswahl der Gewichtsanteile der Comonomere erfolgt dabei so, dass im Allgemeinen eine Glasübergangstemperatur Tg von vorzugsweise $\leq$ 60°C, bevorzugt -50°C bis +60°C, besonders bevorzugt -30°C bis +50°C, insbesondere 0°C bis 30°C, resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, Seite 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in zahlreichen Literaturstellen und Standardwerken der Polymertechnologie zu finden und in Tabellenwerken, die im Internet recherchierbar sind, wie etwa von Aldrich unter dem Stichwort "Polymer Properties, Thermal Transitions of Homopolymers" (https://www.sigmaaldrich.com/content/dam/sigmaaldrich/docs/Aldrich/General_Information/thermal_transitions_of _homopolymers.pdf) aufgeführt.

Der Anteil der Comonomere (A) am Aufbau der erfindungsgemäßen Copolymeren beträgt vorzugsweise $\geq$ 20 Gew.-%, besonders bevorzugt 30 bis 95 Gew.-%, jeweils bezogen auf das Gesamtgewicht aus (A) und funktionalisiertem Siliconharz (B). Das heißt, der Anteil an (B) beträgt vorzugsweise < 80%, insbesondere 5 - 70 Gew.-%, bezogen auf das Gesamtgewicht aus (A) und funktionalisiertem Siliconharz (B).

Besonders bevorzugte Siliconharze (B) sind solche, für die p und z in der allgemeinen Formel

$$[R^1_p(OR^2)_zSiO_{(4-p-z)/2}] \qquad (I)$$

die Bedeutung p = 0 oder 1 und z = 0, 1 oder 2 hat, wobei stets für mindestens 20 Mol-% aller Siloxaneinheiten der Formel (I) p = 1 und z = 0 oder p = 0 und z = 0 gilt, dabei wird diese Bedingung für p = 1 und z = 0 für mindestens 40 Mol-% aller Siloxaneinheiten (I) erfüllt.

Es ist außerdem bevorzugt, dass in den Siloxaneinheiten (I) höchstens 50 Mol-% sogenannte Q-Einheiten vorliegen, für die gilt p = 0 und z = 0.

Darüber hinaus sind auch solche Siliconharze geeignet, die aus einer beliebigen Kombination von M-Einheiten ($R_3SiO_{1/2}$), D-Einheiten ($R_2SiO_{2/2}$), T-Einheiten ($RSiO_{3/2}$) und Q-Einheiten ($SiO_{4/2}$) bestehen, wobei R ein Rest $R^1$ oder Rest $-OR^2$ ist und $R^1$ und $R^2$ die oben dafür angegebene Bedeutung haben,, mit der Maßgabe, dass stets mindestens 20 Mol-% T-Einheiten oder Q-Einheiten gemäß Formel (I) enthalten sind, für die gilt p = 1 und z = 0 oder p = 0 und z = 0.

Am meisten bevorzugte Siliconharze (B) sind solche, die sich im Wesentlichen nur aus T oder Q-Einheiten und D Einheiten aufbauen, wobei das Mol-Verhältnis von T/D-Einheiten größer 50/50, insbesondere größer als 70/30, ist und besonders bevorzugt nur T-Einheiten ohne D-Einheiten vorhanden sind. Weiterhin am meisten bevorzugte Siliconharze sind solche, die zum überwiegenden Teil aus T-Einheiten bestehen, insbesondere solche die zu mindestens 80 Mol-% aus T-Einheiten bestehen, ganz besonders solche die zu mindestens 90 Mol-% aus T-Einheiten bestehen. Bei den bevorzugten Siliconharzen handelt es sich außerdem um solche, die einen geringen Anteil an siliciumgebundenen Alkoxygruppen tragen. Das angewendete Syntheseverfahren ist gegenüber hydrolysierbaren Alkoxygruppen tolerant, die Alkoxygruppen werden also nicht wesentlich hydrolysiert, d.h. es bilden sich aus den Alkoxygruppen im Wesentlichen keine Hydroxygruppen, die durch Kondensation als Wasser abgespalten werden unter Hinterlassung einer Si-O-Si-Einheit. Trotzdem ist es bevorzugt, dass die verwendeten funktionellen Siliconharze einen niedrigen Gehalt an Gruppen der Art $R^2O$, wobei $R^2$ die oben dafür angegebene Bedeutung hat, gemäß Formel (I) aufweisen. Je mehr Alkoxygruppen vorhanden sind, desto geringer ist der Kondensationsgrad des Siliconharzes. Ein hoher Kondensationsgrad ist bevorzugt, weil er bei sonst gleichem Substitutionsmuster in der Regel einer höheren Glasübergangstemperatur entspricht. Je höher der Glasübergang liegt, desto weniger neigen die Siliconharzanteile des Copolymers dazu zu erweichen, was bei Baubeschichtungen von Vorteil ist, da sich dadurch eine geringere Anschmutzneigung auch bei höheren Gebrauchstemperaturen erreichen lässt.

Mindestens 1 Mol-% und vorzugsweise höchstens 50 Mol-%, bevorzugt höchstens 40 Mol-%, aller Siloxaneinheiten der Formel (I) enthalten als Rest $R^1$ einen ethylenisch ungesättigten Rest E.

Der Rest X kann linear, verzweigt oder cyclisch sein. Neben der Doppelbindung können auch weitere funktionelle Gruppen vorhanden sein, die in der Regel gegenüber einer olefinischen Polymerisation inert sind, beispielsweise Halogen-, Carboxy-, Sulfinato-, Sulfonato-, Amino-, Azido-, Nitro-, Epoxy-, Alkohol-, Ether-, Ester-, Thioether- und Thioester-Gruppen sowie aromatische iso- und heterocyclische Gruppen. Bevorzugte Beispiele für Reste X sind einfach ungesättigte $C_2$- bis $C_{10}$-Reste, am meisten bevorzugt ist als Rest X der Acryl- und Methacrylrest.

Die von aliphatischen C-C-Mehrfachbindungen freien Kohlenwasserstoffreste **R*** können beispielsweise Alkyl-, Cycloalkyl- oder Arylreste sein. Beispiele für Reste R* sind daher Alkylreste, wie der Methyl-, Ethyl-, n-Propyl-, isoPropyl-, n-Butyl-, iso-Butyl-, tert.-Butyl-, n-Pentyl-, isoPentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, Hexadecylreste, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste wie Tolylreste, Xylylreste und Ethylphenylreste; und Aralkylreste, wie der Benzylrest und der β-Phenylethylrest. Besonders bevorzugte Reste R* sind der Methyl, der Isooctyl-, der Propyl- und der Phenylrest, wobei diese Aufzählung nur illustrativ und nicht beschränkend zu verstehen ist.

Falls die Reste R* substituiert sind, so können diese zusätzlich eines oder mehrere gleiche oder verschiedene Heteroatome ausgewählt aus O-, S-, Si-, Cl-, F-, Br-, P- oder N-Atomen enthalten.

Beispiele für Reste R* gelten im vollen Umfang für Reste $R^2$.

Beispiele für Alkylreste R* mit 1 bis 12 C-Atomen und Arylreste R* mit 6 bis 18 C-Atomen gelten im vollen Umfang für $C_1$-$C_{12}$-Alkyl- und $C_6$-$C_{18}$-Arylreste $R^5$.

In einer bevorzugten Ausführungsform der Erfindung sind in den Siliconharzen aus Siloxaneinheiten (I) zwei verschiedene Reste R* vorhanden.

Beispiele für bevorzugte Kombinationen von Resten R* sind der Phenylrest und der Methylrest, der n-Butylrest und der Ethylrest, der n-Butylrest und der Methylrest, der Ethylrest und der Methylrest, der n-Octylrest und der Methylrest, der iso-Octylrest und der Methylrest, der iso-Octylrest und der Phenylrest, der n-Octylrest und der Phenylrest, der n-Octylrest und der Ethylrest, der Phenylrest und der Ethylrest, der iso-Octylrest und der Ethylrest, wobei die Kombination von Phenylrest und Methylrest, Ethylrest und Methylrest und iso-Octylrest und Methylrest, Ethylrest und iso-Octylrest und Phenylrest und iso-Octylrest besonders vorteilhaft sind. Eine Kombination aus Methyl und Isooctylresten und aus Methyl- und Phenylresten als die zwei verschiedenen Reste R* hat sich als besonders wirksam erwiesen. Mit diesen beiden Restekombinationen lassen sich die beiden Eigenschaften Verträglichkeit in der Polymermatrix und hohe Glasübergangstemperatur am besten steuern und einstellen. Außerdem erfüllen sie die Anforderungen an Verfügbarkeit und Wirtschaftlichkeit optimal.

Es ist bevorzugt und hat sich als besonders vorteilhaft erwiesen, wenn die Siloxaneinheit (I) mit dem kohlenstoffreicheren Substituenten zu nicht mehr als 75 mol-% aller Siloxaneinheiten der Formel (I) vorhanden ist. Umgekehrt bedeutet dies, dass die Siloxaneinheit (I) mit dem kohlenstoffärmeren Substituenten in nicht weniger als 25 mol-% aller Siloxaneinheiten der Formel (I) vorhanden ist. In einer besonders bevorzugten Ausführungsform der Erfindung sind die Siloxaneinheiten der Formel (I) mit dem kohlenstoffärmeren Substituenten in der Überzahl, d.h. zu mehr als 50 mol-% aller Siloxaneinheiten der Formel (I) vorhanden, und daher kohlenstoffreichere Substituenten in der Unterzahl, d.h. zu weniger als 50 mol-% aller Siloxaneinheiten der Formel (I) vorhanden. Unter kohlenstoffreichen Substituenten R* sind Kohlenstoffwasserstoffreste, wie Alkyl-, Cycloalkyl-oder Arylreste, mit 4 bis 18 C-Atomen, vorzugsweise 6 bis 18 C-Atomen, bevorzugt der Isooctylrest und der Phenylrest, und mit kohlenstoffarmen Substituenten R* sind Alkylreste mit 1 bis 3 C-Atomen, bevorzugt der Methylrest, zu verstehen.

Alle getroffenen Verhältnisangaben sind dabei normiert auf 100 Mol-% als Summe der verschiedene kohlenstoffreiche Si-C gebundenen Reste tragenden Einheiten der Formel (I).

Dabei ist es bei der Kombination aus Isooctylrest und Methylrest bevorzugt, dass mehr Siloxaneinheiten der Formel (I) vorhanden sind, die Methylreste tragen, als solche die Isooctylreste tragen. Bevorzugt ist das Verhältnis der Anzahl der Siloxaneinheiten der Formel (I) die Methylreste tragen, zur Anzahl der Siloxaneinheiten der Formel (I), die Isooctylreste tragen, 51:49 bis 99:1, besonders bevorzugt 55:45 bis 98:2, insbesondere 60:40 bis 98:2. Als besonders wirkungsvoll haben sich die Verhältnisse 60:40, 70:30, 90:10 und 95:5 erwiesen. Alle Angaben sind dabei normiert auf 100 als Summe der Methylgruppen tragenden und der Isooctylgruppen tragenden Einheiten der Formel (I).

Bei der Kombination aus Phenylresten und Methylresten sind folgende Verhältnisse der Anzahl der Siloxaneinheiten der Formel (I), die Methylreste tragen, zur Anzahl der Siloxaneinheiten der Formel (I), die Phenylreste tragen, bevorzugt 51:49 bis 99:1, besonders bevorzugt 55:45 bis 98:2, insbesondere 60:40 bis 98:2.

Als besonders wirkungsvoll haben sich die Verhältnisse 60:40, 70:30, 80:20, 90:10 und 95:5 erwiesen.

Alle Angaben sind dabei normiert auf 100 als Summe der Methylgruppen tragenden und der Phenylgruppen tragenden Einheiten der Formel (I).

Auch die Kombination von mehr als zwei unterschiedlichen Resten ist möglich und erfindungsgemäß. In diesem Fall gelten die oben angegebenen bevorzugten Verhältnisse für die Kombination von zwei unterschiedlichen Resten sinngemäß, wenn man die kohlenstoffreicheren substituierten Siloxaneinheiten zusammenzählt und ins Verhältnis zur Siloxaneinheit setzt, die den kleinsten, bzw. den am wenigsten kohlenstoffreichen Substituenten trägt, wobei in der oben ausgeführten Art und Weise zu unterscheiden ist, zwischen Kombinationen unter Beteiligung aromatischer Substituenten und solchen ohne Beteiligung aromatischer Substituenten.

Auch in dem Fall, dass mehr als zwei verschiedene Siloxaneinheiten der Formel (I) vorliegen, sind Kombinationen aus Methyl-, n-Propyl-, Phenyl, n-Butyl-, n-Octyl- und iso-Octylresten bevorzugt, insbesondere von Methyl-, n-Propyl-, Phenyl- und iso-Octylresten, vor allem von Methyl-, Phenyl-, n-Propyl- und iso-Octylresten bevorzugt.

Die Anbringung der ethylenisch ungesättigten Gruppe an das Siliconharz S kann durch die Kondensation eines Silans der Formel (II) mit dem Siliconharz S erfolgen,

$$(R^3O)_{3-n}(R^4)_nSi\text{-}(CR^5{}_2)_m\text{-}X \qquad (II)$$

wobei $R^3$ ein Wasserstoffatom, einen $C_1$-$C_6$-Alkylrest oder einen $C_6$-$C_{18}$-Arylrest bedeutet,
$R^4$ ein Wasserstoffatom, einen $C_1$-$C_{12}$-Alkylrest oder einen $C_6$-$C_{18}$-Arylrest bedeutet,
$R^5$ ein Wasserstoffatom, einen $C_1$-$C_{12}$-Alkylrest oder einen $C_6$-$C_{18}$-Arylrest bedeutet, vorzugsweise ein Wasserstoffatom ist,
n 0, 1 oder 2 ist,
m eine ganze Zahl von größer oder gleich 2 ist, vorzugsweise von 2 bis 10 ist, bevorzugt 3 ist, und
X eine ethylenisch ungesättigte organische Gruppe bedeutet.

Es ist dabei bevorzugt, dass n die Werte 0 oder 1 besitzt, besonders bevorzugt ist n = 0, d.h. ein Trialkoxysilan. Diese sind nicht nur am einfachsten und wirtschaftlichsten zugänglich, sondern leisten auch einen Beitrag zur Kondensation der Harze, d.h. können dazu beitragen den Kondensationsgrad zu erhöhen und damit die Glasübergangstemperatur des erhaltenen Harzes.

Bevorzugt bedeuten in Formel (II) die Reste $R^3$ und $R^4$ unsubstituierte Alkylgruppen mit 1 bis 6 C-Atomen, vorzugsweise einen Methyl-, Ethyl- oder Propylrest, insbesondere einen Methyl- oder Ethylrest, vor allem einen Methylrest und der Rest $R^5$ bedeutet vorzugsweise Wasserstoff. Der Rest X kann linear, verzweigt oder cyclisch sein. Neben der Doppelbindung können auch weitere funktionelle Gruppen vorhanden sein, die in der Regel gegenüber einer olefinischen Polymerisation inert sind, beispielsweise Halogen-, Carboxy-, Sulfinato-, Sulfonato-, Amino-, Azido-, Nitro-, Epoxy-, Alkohol-, Ether-, Ester-, Thioether- und Thioester-Gruppen sowie aromatische iso- und heterocyclische Gruppen. Bevorzugte Beispiele für X sind einfach ungesättigte $C_2$- bis $C_{10}$-Reste, am meisten bevorzugt sind als Reste X Alkenylcarbonyloxyreste, wie der Acryloxy- und Methacryloxyrest.

Bevorzugte Silane (II) sind die Silane der Formel

$$(R^6O)_3Si(CH_2)_3OC(=O)C(CH_3)=CH_2,$$

wobei $R^6$ eine $CH_3$-Gruppe oder eine $CH_3$-$CH_2$-Gruppe bedeutet, d.h. bevorzugte Silane sind 3-Methacryloxypropyl-trimethoxysilan oder 3-Methacryloxypropyl-triethoxysilan.

Als Siliconharz S, das mit ethylenisch ungesättigten Gruppen durch Kondensation mit einem Silan der Formel (II) funktionalisiert wird, wird vorzugsweise solches eingesetzt, das aus Siloxaneinheiten der Formel

$$[R_{(p+z)}SiO_{(4-p-z)/2}] \qquad (III)$$

aufgebaut ist,

wobei R gleich oder verschieden ist und ein Rest R* oder ein Rest -OR² ist,
wobei R*, R², p und z die oben dafür angegebene Bedeutung haben,
mit der Maßgabe, dass bei mindestens 20 Mol-%, vorzugsweise bei mindestens 30 Mol-%, aller Siloxaneinheiten der Formel (III) im Siliconharz S die Summe p+z 1 oder 0 ist, wobei p 1 oder 0 und z 0 ist.

Es kann aber auch auf andere bekannte Weisen die Funktionalisierung von Siliconharzen erfolgen, wie beispielsweise durch die Hydrosilylierung einer geeigneten organischen Spezies an ein Si-H-funktionelles Siliconharz oder auf dem Wege der Kondensation eines ethylenisch ungesättigten organischen Moleküls an eine carbinolfunktionelle Siliconharzspezies. Hier sind im Prinzip keine Einschränkungen gegeben, d.h. die Synthese ist technisch nicht auf die Verwendung von Silanen beschränkt. Unter dem Gesichtspunkt der Wirtschaftlichkeit und der Einfachheit ist es jedoch bevorzugt, die ethylenisch ungesättigte Gruppe durch die Cokondensation des Siliconharzes mit einem alkoxyfunktionellen Silan durchzuführen, wobei wiederum aus Gründen der Wirtschaftlichkeit und der Verfügbarkeit die Verwendung von gamma-Silanen mit einem Spacer aus genau drei Kohlenstoffatomen, d.h. m = 3 in Formel (II), zwischen der die ethylenische Gruppe enthaltenden funktionellen Gruppe und dem Siliciumatom besonders bevorzugt ist.

Überraschenderweise und im Gegensatz zum bestehenden Stand der Technik wurde gefunden, dass die gut verfügbaren gamma-Silane zur Umsetzung der Erfindung sehr gut geeignet sind, trotz der geringeren Reaktivität der gamma-Silane verglichen mit den alpha-Silanen. Es wurde dabei gefunden, dass die Erfindung grundsätzlich auch mit kleinen Mengen an zur Funktionalisierung der Siliconharze S verwendeten gamma-Silanen von nur 1,0 Gew.-% Silan, bezogen auf die Gesamtmenge eingesetztes Siliconharz S, möglich ist, jedoch hat sich gezeigt, dass es im Sinne der vollständigeren Einbindung des Siliconharzes vorteilhaft ist, mindestens 1,5 Gew.-% gamma-Silan, bevorzugt mindestens 2,0 Gew.-%, besonders bevorzugt mindestens 2,5 Gew.-% gamma-Silan, insbesondere mindestens 3,0 Gew.-% gamma-Silan zu verwenden, wobei die am meisten bevorzugte Menge zwischen 4 und 8 Gew.-% liegt, da in diesem Bereich die beste Balance zwischen Effizienz und Wirtschaftlichkeit gegeben ist.

Zusätzlich können in den erfindungsgemäßen Polymerdispersionen noch bis zu 30 Gew-%, bezogen auf das Gesamtgewicht der Komponenten (A) und (B), mindestens eines Silans der allgemeinen Formel $(R^7)_{4-g}Si(OR^8)_g$ (III) enthalten sein, wobei g eine Zahl im Wert von 1, 2, 3 oder 4 bedeutet, $R^7$ ein organofunktioneller Rest ist, ausgewählt aus der Gruppe Alkoxyrest und Aryloxyrest mit jeweils 1 bis 12 C-Atomen, Phosphonsäuremonoesterrest, Phosphonsäurediesterrest, Phosphonsäurerest, Methacryloyloxyrest, Acryloyloxyrest, Vinylrest, Mercaptorest, Isocyanatorest, wobei der Isocyanatorest gegebenenfalls zum Schutze vor chemischen Reaktionen reaktionsblockiert sein kann, Hydroxyrest, Hydroxyalkylrest, Vinylrest, Epoxyrest, Glycidyloxyrest, Morpholinorest, Piperazinorest, einen primären, sekundären oder tertiären Aminorest mit einem oder mehreren Stickstoffatomen, wobei die Stickstoffatome durch Wasserstoff oder einwertige aromatische, aliphatische oder cycloaliphatische Kohlenwasserstoffreste substituiert sein können, Carbonsäurerest, Carbonsäureanhydridrest, Aldehydrest, Urethanrest, Harnstoffrest, wobei der Rest $R^7$ unmittelbar am Siliciumatom gebunden sein kann oder durch eine Kohlenstoffkette von 1 bis 6 C-Atomen davon getrennt sein kann und $R^8$ einen einwertigen linearen oder verzweigten aliphatischen Kohlenwasserstoffrest mit jeweils 1 bis 12 C-Atomen oder cycloaliphatischen Kohlenwasserstoffrest mit 6 bis 12 C-Atomen oder einen einwertigen aromatischen Kohlenwasserstoffrest mit 6 bis 12 C-Atomen, oder einen Rest der Formel -C(=O)-$R^9$ bedeutet, wobei $R^9$ einen einwertigen linearen oder verzweigten aliphatischen Kohlenwasserstoffrest mit jeweils 1 bis 12 C-Atomen oder einen cycloaliphatischen Kohlenwasserstoffrest mit 6 bis 12 C-Atomen oder einen einwertigen aromatischen Kohlenwasserstoffrest mit 6 bis 12 C-Atomen bedeutet. Das ausgewählte Silan oder gegebenenfalls die ausgewählten Silane können in nicht hydrolysierter Form, in hydrolysierter Form oder in hydrolysierter und teilkondensierter oder hydrolysierter und kondensierter Form oder in einem Gemisch dieser Formen vorliegen.

Weiterhin können bei der Miniemulsionspolymerisation gegebenenfalls noch hydrophobe Coemulgatoren in Mengen von bis zu 3 Gew.-% vorhanden sein, bezogen auf das Gesamtgewicht der Komponente (A) und der funktionalisierten Komponente (B). Im vorliegenden Fall können Siliconharze oftmals die Funktion des Coemulgators übernehmen. Weitere Beispiele für Coemulgatoren sind Hexadekan, Cetylalkohol, oligomere Cyclosiloxane, wie z.B. Octamethylcyclotetrasiloxan, aber auch pflanzliche Öle wie Rapsöl, Sonnenblumenöl oder Olivenöl. Weiterhin geeignet sind organische oder anorganische Polymere mit einem zahlenmittleren Molekulargewicht Mn von kleiner 10000. Erfindungsgemäß besonders bevorzugte hydrophobe Coemulgatoren sind die zu polymerisierenden Siliconharze selbst und Hexadekan.

Die Herstellung der Copolymerisate erfolgt in einem Heterophasenprozess nach der bekannten Technik der Miniemulsionspolymerisation. Miniemulsionspolymerisationen unterscheiden sich in einigen wesentlichen Punkten von der Emulsionspolymerisation. Vergleiche hierzu: Dissertation "Nicht-wässrige Emulsionspolymerisationen" vorgelegt von Kevin Müller, Mainz 2008, S. 17 - 20 und dort zitierte Literatur: Im Gegensatz zur Emulsionspolymerisation, bei der die Größe der Polymerlatexpartikel im Wesentlichen durch kinetische Prozesse und die Stabilität der Latices bestimmt wird, basiert die Miniemulsionspolymerisation darauf, dass das Monomer bereits vor der Polymerisation vollständig innerhalb von Mizellen vorliegt und somit während der Polymerisation nicht mehr von den Monomertröpfchen in die Mizellen diffundieren muss. In anderen Worten können die gebildeten Latexpartikel somit als polymerisierte Kopien der zu Beginn vorliegenden Monomertröpfchen aufgefasst werden. Dies hat zur Folge, dass die Größe der Latexpartikel ausschließlich durch den Dispersionsprozess und die Stabilität der mit Monomer gefüllten Mizellen bestimmt wird. Da kein Transport von Monomer durch die kontinuierliche Phase nötig ist, kann es hierdurch ermöglicht werden, auch Monomere einzusetzen, welche in der kontinuierlichen Phase absolut unlöslich sind. Um die Stabilität der Monomertröpfchen zu erhöhen, ist es notwendig, eine stattfindende Ostwald-Reifung zu unterdrücken. Deshalb wird während der Miniemulsionspolymerisation der dispergierten Monomerphase ein Hydrophob bzw. bei inversen Miniemulsionen ein Lipophob zugesetzt.

Ggf. kann als Hydrophob auch ein hierfür geeignetes hydrophobes Monomer wirken, wie beispielsweise eine Siliconkomponente. Von der Suspensionspolymerisation unterscheidet sich die Miniemulsionspolymerisation dabei in zweierlei Hinsicht: Zum einen sind die erhaltenen Polymerpartikel im Miniemulsionsprozess deutlich kleiner (50 - 500 nm) als die der Suspensionspolymerisation (1 μ - 1 mm). Zum anderen liegt die Anzahl der Radikale pro wachsendem Partikel in der Suspensionspolymerisation mit 10 deutlich über denen der Miniemulsionspolymerisation, wo statistisch gesehen während der Reaktion pro wachsendem Partikel 0,5 Radikale vorhanden sind. Zur Durchführung einer radikalischen Miniemulsionspolymerisation ist es zunächst notwendig, eine Miniemulsion eines Vinylmonomers in einer damit nicht mischbaren kontinuierlichen Phase aufzubauen. Hierzu wird das Monomer zusammen mit dem Emulgator und dem Hydrophob durch Energieeintrag, z.B. mit einem Hochdruckhomogenisator oder mittels Ultraschall, in Wasser dispergiert. Dabei verlangsamt die Kombination aus Emulgator und Hydrophob das Auftreten von Ostwald-Reifung und die Koaleszenz der Monomertröpfchen. Im zweiten Schritt erfolgt die Polymerisation der auf diese Weise gebildeten Monomertröpfchen. Diese kann entweder durch einen wasserlöslichen Initiator, welcher nach Herstellung der stabilen Miniemulsion zugesetzt wird, oder durch öllösliche Initiatoren, welche schon von Beginn an in der Monomerphase vorhanden sein können, oder durch eine Kombination beider, gestartet werden.

Die in der Miniemulsion gebildeten Monomertröpfchen haben etwa eine Größe von 50 - 500 nm. Die geringe Größe ist dabei eine Folge der Homogenisierung der Miniemulsion, was durch den Eintrag hoher Energiemengen erreicht wird. Die Umverteilung von Monomer zwischen den einzelnen Tröpfchen ist durch die spezielle Art der Stabilisierung unterdrückt.

Auch liegen parallel zu den kleinen Monomertröpfchen keine freien Mizellen mehr in der Miniemulsion vor. Im Gegensatz zur konventionellen Emulsionspolymerisation sind deshalb hauptsächlich die Tröpfchen der Ort der Nukleation (Tröpfchennukleation). Während der Miniemulsionspolymerisation ist somit auch nur eine äußerst geringe Diffusion der Monomeren zu beobachten. Innerhalb einer Miniemulsionspolymerisation kann somit jedes dispergierte Monomertröpfchen als individueller auf nanoskopischer Ebene betriebener Reaktor beschrieben werden. Als Folge ergeben sich für dieses Verfahren im Gegensatz zu den traditionellen Emulsions- und Suspensionspolymerisationen einige Vorteile, welche im Folgenden aufgezeigt werden sollen:

- Da das Monomer nicht durch die kontinuierliche, meist wässrige Phase transportiert werden muss, ist es möglich, in Miniemulsionen auch absolut wasserunlösliche Monomere zu polymerisieren.
- Die Größe der Latexpartikel entspricht meist der der vorher gebildeten Monomertröpfchen und lässt sich recht genau über die Menge und Art des verwendeten Emulgators einstellen.
- Jedes Monomertröpfchen ist im Hinblick auf seine Zusammensetzung homogen. Speziell für Copolymerisationen ist somit das Monomerverhältnis in jedem Tröpfchen gleich und unterliegt nicht einem Diffusionsunterschied der Monomere.
- Die Mengen an eingesetztem Emulgator sind geringer, da die Miniemulsion nur kinetisch, nicht aber thermodynamisch stabilisiert ist.

Der verfahrenswesentliche Schritt der Herstellung der feinteiligen Miniemulsion wird im vorliegenden erfindungsgemäßen Fall wie folgt ausgeführt:

Im ersten Schritt werden ein oder mehrere Siliconharze aus Siloxaneinheiten der Formel (I) in einem oder mehreren ethylenisch ungesättigten Monomeren aufgelöst, wobei eine Siliconharz-in-Monomer-Lösung erhalten wird. Es ist dabei kennzeichnend, dass die Siliconharze aus Siloxaneinheiten der Formel (I) in der jeweiligen Monomermischung löslich sind. Unlösliche Bestandteile werden ggf. durch Filtration abgetrennt, Erfindungsgemäß sind nur solche Siliconharz-in-Monomer-Lösungen, die keine unlöslichen Siliconbestandteile enthalten.

Ggf. wird der Siliconharz-in-Monomer-Lösung ein hydrophober Coemulgator zugesetzt. Beispiele für hydrophobe Coemulgatoren sind weiter oben genannt.

Im zweiten Schritt wird die Siliconharz-in-Monomer-Lösung mit Wasser und mindestens einem Emulgator und ggf. weiteren Hilfsstoffen, wie Polymerisationsinhibitoren, die die vorzeitige radikalische Emulsionspolymerisation verhindern, vorzugsweise unter Anwendung hoher Scherkraft, so emulgiert, dass Emulsionen mit Teilchengrößen D(50) von höchstens 350 nm, sogenannte Miniemulsionen, erhalten werden. Hohe Scherkraft kann hierbei durch geeignete Emulgiervorrichtungen, wie konventionelle Rotor-Stator-Systeme, erzeugt werden oder in anderer allgemein bekannter Weise, wie beispielsweise durch Hochdruckhomogenisatoren, Dissolverscheiben, Ultraschallgeräte oder vergleichbare Emulgiertechnologien, mit denen eine hohe Scherkraft ausgeübt werden kann, die die Erzeugung kleiner Teilchen von höchstens 200 nm erlaubt, sodass Miniemulsionen mit Teilchengrößen D(50) von höchstens 350 nm erhalten werden. Dabei haben sich bei handelsüblichen Rotor-Stator-Systemen Umdrehungszahlen von 4 000 - 12 000, vorzugsweise von 5 000 - 11 000, insbesondere von 6 000 - 10 000, als besonders vorteilhaft erwiesen. Sowohl kontinuierliche als auch diskontinuierliche Ausführungsformen sind geeignet. Bei Hochdruckhomogenisatoren haben sich Drücke von vorzugsweise 300 bar - 1000 bar, bevorzugt von 350 bar - 900 bar, insbesondere von 400 bar - 800 bar, als vorteilhaft erwiesen. Da es sich um polymerisierbare Zubereitungen handelt, ist auf eine gute Temperaturkontrolle zu achten, d.h. die Temperaturen der Miniemulsionen sollen vorzugsweise 60°C, bevorzugt 55°C, insbesondere 50°C, nicht übersteigen und ggf. rasch wieder unter diese Temperaturen abgekühlt werden.

Erfindungsgemäße Siliconharz-in-Monomer-Lösungen besitzen Viskositäten von 2 - 20 000 mPas bei 25°C, vorzugsweise von 5 - 15 000 mPas bei 25°C, insbesondere von 7 - 10 000 mPas bei 25°C. Die erfindungsgemäßen Miniemulsionen besitzen Viskositäten von 2 - 5000 mPas bei 25°C, besonders von 3 - 4500 mPas bei 25°C, insbesondere von 5 - 4000 mPas bei 25°C.

Der Gehalt an Wasser beträgt in den erfindungsgemäßen Miniemulsionen 80 - 20 Gewichtsprozent, vorzugsweise 75 - 20, insbesondere 70 - 25 Gewichtsprozent.

Die Teilchengröße D(50)in den erfindungsgemäßen Miniemulsionen beträgt höchstens 350 nm, vorzugsweise höchstens 300 nm, bevorzugt höchstens 250 nm, besonders bevorzugt höchstens 200 nm, und mindestens 20 nm, bevorzugt mindestens 30 nm und besonders bevorzugt mindestens 50 nm.

Die erfindungsgemäßen Miniemulsionen bestehen aus einer kontinuierlichen Wasserphase und einer dispergierten organischen Phase.

Die organische Phase der Miniemulsionen wird durch den Vorgang der radikalischen Emulsionspolymerisation polymerisiert. Dabei wird in einem dritten Schritt die dispergierte Siliconharz-in-Monomer-Lösung der freien radikalischen Polymerisation unterzogen. Die radikalische Emulsionspolymerisation wird dabei bevorzugt so ausgeführt, dass die Miniemulsion zu einer Vorlage aus Wasser und einem Teil Katalysator zudosiert wird. Weitere Dosierungen umfassen den Polymerisationsinitiator der ggf. mehrere Komponenten umfassen kann, die jeweils separat dosiert oder vorgelegt werden, je nach Art ihrer gegenseitigen Wechselwirkung und Funktion im Polymerisationsprozess. Nach vollendeter Miniemulsionspolymerisation, wird die erhaltene Dispersion erforderlichenfalls hinsichtlich des gewünschten pH-Wertes eingestellt, ggf. filtriert und steht dann für die jeweilige Verwendung zur Verfügung.

Die Reaktionstemperaturen bei der Miniemulsionspolymerisation betragen vorzugsweise 0°C bis 100°C, bevorzugt 5°C bis 80°C, besonders bevorzugt 30°C bis 70°C.

Der pH-Wert des Dispergiermediums liegt zwischen 2 und 9, bevorzugt zwischen 4 und 8. In einer besonders bevorzugten Ausführungsform zwischen 4,5 und 7,5. Die Einstellung des pH-Wertes vor Beginn der Reaktion kann durch Salzsäure oder Natronlauge erfolgen. Die Polymerisation kann diskontinuierlich oder kontinuierlich, unter Vorlage aller oder einzelner Bestandteile des Reaktionsgemisches, unter teilweiser Vorlage und Nachdosierung einzelner Bestandteile des Reaktionsgemisches oder nach dem Dosierverfahren ohne Vorlage durchgeführt werden. Alle Dosierungen erfolgen vorzugsweise im Maße des Verbrauchs der jeweiligen Komponente.

Die Initiierung der Polymerisation erfolgt mittels der üblichen wasserlöslichen Initiatoren oder Redox-Initiator-Kombinationen, vorzugsweise mit letzteren. Beispiele für Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid und Azobisisobutyronitril. Die genannten Initiatoren werden vorzugsweise in Mengen von 0,01 bis 4,0 Gew.-%, bezogen auf das Gesamtgewicht der Monomeren, eingesetzt. Als Redox-Initiator-Kombinationen verwendet man oben genannte Initiatoren in Verbindung mit einem Reduktionsmittel. Geeignete Reduktionsmittel sind Sulfite und Bisulfite einwertiger Kationen, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt vorzugsweise 0,15 bis 3 Gew.-% der eingesetzten Monomermenge. Zusätzlich können geringe Mengen einer im Polymerisationsmedium löslichen Metallverbindung eingebracht werden, deren Metallkomponente unter den Polymerisationsbedingungen redoxaktiv ist, beispielsweise auf Eisen- oder Vanadiumbasis. Ein besonders bevorzugtes Initiator-System aus den vorangenannten Komponenten ist das System t-Butylhydroperoxid/Natriumhydroxymethansulfinat/Fe (EDTA)2+/3+.

Nach der Miniemulsionspolymerisationsmethodik können auch überwiegend öllösliche Initiatoren verwendet werden, etwa Cumolhydroperoxid, Isopropylbenzolmonohydroperoxid, Dibenzoylperoxid oder Azobisisobutyronitril. Bevorzugte Starter für Miniemulsionspolymerisationen sind Kaliumpersulfat, Ammoniumpersulfat, Azobisisobutyronitril sowie Dibenzoylperoxid.

Die Ausmaße der Silicondomänen innerhalb des Copolymers liegen nach erfolgter Copolymerisation vorzugsweise im Bereich von 5 nm bis 150 nm, insbesondere von 10 nm bis 140 nm und ganz besonders bevorzugt von 15 nm bis 125 nm. Die Ausmaße lassen sich beispielsweise durch Rasterelektronenmikroskopie oder Transmissionselektronenmikroskopie der Polymerdispersionen oder der aus ihnen erhaltenen Polymerfilme bestimmen.

Die erfindungsgemäßen Copolymerisate in Form deren Dispersionen werden vorzugsweise als Bindemittel zur Herstellung von Beschichtungen verwendet. Sie verfügen über hohe Lagerstabilitäten. Sie verleihen Beschichtungen, in denen sie als Bindemittel eingesetzt werden, ausgezeichnete Widerstandsfähigkeit zum Beispiel gegen Witterungseinflüsse, Angriff durch chemische Einflüsse und UV-Strahlung. Ebenso lassen sich mit diesen Beschichtungen sehr gute Wasserfestigkeit und geringe Verschmutzungsneigung realisieren. Mit hydrophob eingestellten Copolymeren lassen sich zudem poröse Beschichtungen realisieren, mit einer Pigmentvolumenkonzentration über der kritischen Pigmentvolumenkonzentration, die sich durch exzellente Gas- und Wasserdampfdurchlässigkeit bei gleichzeitig hoher Wasserabweisung auszeichnen. Durch das Einpolymerisieren von Silanen, die hydrolysierbare und kondensierbare Gruppen enthalten, in das Copolymer, lassen sich Bindemittel herstellen, die nach dem Auftrag feuchtigkeitshärtend sind, so dass sich die Filmhärten, Thermoplastizität und die Verschmutzungsneigung einstellen lassen.

Außer zu diesem Zwecke können die erfindungsgemäßen Copolymerisate in Form deren Dispersionen und Redispersionspulver auch als Zusätze zur Zubereitungen für Beschichtungen oder andere Einsatzzwecke verwendet werden, sowie ohne weitere Zusatzstoffe als reines über Substraten filmbildendes oder zu Blöcken oder anderen beliebigen Formen aushärtendes Material.

Beispiele für Anwendungsfelder, in denen die erfindungsgemäßen Copolymerisate in Form deren Dispersionen und Redispersionspulver die oben bezeichneten Eigenschaften zu manipulieren gestatten, sind die Herstellung von Beschichtungsstoffen und Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien und Formteilen. Die erfindungsgemäßen Copolymerisate können in flüssiger oder in ausgehärteter fester Form in Elastomermassen eingearbeitet werden. Hierbei können sie zum Zwecke der Verstärkung oder zur Verbesserung anderer Gebrauchseigenschaften, wie der Steuerung der Transparenz, der Hitzebeständigkeit, der Vergilbungsneigung und der Witterungsbeständigkeit eingesetzt werden.

Je nach Anwendung können gegebenenfalls noch ein oder mehrere Hilfsstoffe den Copolymerisaten zugegeben werden. Beispiele hierfür sind Lösemittel oder Filmbildehilfsmittel; Gemische aus mindestens zwei organischen Lösemitteln; Pigmentnetz- und Dispergiermittel; oberflächeneffektgebende Additive, wie zum Beispiel solche, die zur Erzielung von Texturen wie der Hammerschlagtextur oder der Orangenhaut verwendet werden; Antischaummittel; Substratnetzmittel; Oberflächenverlaufsmittel; Haftvermittler; Trennmittel; weiteres organisches Polymer, das nicht identisch ist mit dem organischen Polymer (A); Tensid; hydrophober Hilfsstoff; und ein nicht radikalisch polymerisierbares Siliconharz.

Beispiele für Hilfsstoffe, die für die erfindungsgemäßen Baubeschichtungsmittel eingesetzt werden können, sind anionische, kationische and ampholytische Tenside (C), Pigmente (D) und Zusatzstoffe (F).

Als anionische Tenside (C) eignen sich besonders:

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO) einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Tenside (C) eignen sich besonders:

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel R*-O-Zo, worin R* einen linearen oder verzweigten, gesättigten oder ungesättigten Alkylrest mit im Mittel 8 - 24 C-Atomen und Zo einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

Als kationische Tenside (C) eignen sich besonders:

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Als Ampholytische Tenside (C) eignen sich besonders:

17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N:N-dimethylammoniumsalze mit einem C8-C18-Acylrest und Alkylimidazolium-Betaine.

Beispiele für Pigmente (D) sind Erdpigmente, wie Kreide, Ocker, Umbra, Grünerde, Mineralpigmente, wie Titandioxid, Chromgelb, Mennige, Zinkgelb, Zinkgrün, Cadmiumrot, Kobaltblau, organische Pigmente, wie Sepia, Kasseler Braun, Indigo, Azo-Pigmente, Antrachinoide-, Indigoide-, Dioxazin-, Chinacridon-, Phthalocyanin-, Isoindolinon- und Alkaliblau-Pigmente.

Die wässrigen Baustoffbeschichtungsmittel können noch Zusatzstoffe (F) enthalten. Beispiele für Zusatzstoffe (F) sind Biozide, Verdicker, Alkylorthotitanate, Alkylborsäureester, Pigmentnetz-und Dispergiermittel, Antischaummittel, Korrosionsschutzpigmente, weitere Metalloxide, die nicht identisch ist mit dem Pigment (D) sind und keine Korrosionsschutzpigmente sind, Metallcarbonate und organische Harze.

Die erfindungsgemäßen siliconharzhaltigen Organocopolymerdispersionen können während dem Vorgang der Herstellung der Baubeschichtungsmittel im Verlaufe unterschiedlicher Prozessschritte zugesetzt werden. Sie können zum Beispiel dem Mahlgut zugegeben werden, wie es typisch für Siliconharzbindemittel ist, oder sie werden während des Auflackvorganges zugesetzt, wie es eher typisch ist für Dispersionen organischer Polymerer.

Die wässrigen Baustoffbeschichtungsmittel enthalten vorzugsweise 1 bis 80 Gew.-%, besonders bevorzugt 4 bis 70 Gew.-%, insbesondere 5 - 60 Gew.-%, der siliconharzhaltigen Organocopolymerdispersionen.

Die wässrigen Baubeschichtungsmittel enthalten vorzugsweise 0,1 bis 10 Gew.-%, besonders bevorzugt 0,5 bis 8 Gew.-%, Tensid (C) .

Die wässrigen Baubeschichtungsmittel enthalten vorzugsweise 0,5 bis 50 Gew.-%, besonders bevorzugt 2 bis 45 Gew.-%, insbesondere 5 bis 40 Gew.-%, Pigment (D).

Die wässrigen Baustoffbeschichtungsmittel enthalten vorzugsweise 10 bis 80 Gew.-%, besonders bevorzugt 15 bis 75 Gew.-%, insbesondere 20 bis 65 Gew.-%, Wasser (E).

Die wässrigen Baustoffbeschichtungsmittel enthalten vorzugsweise 0,1 bis 60 Gew.-%, besonders bevorzugt 1 bis 50 Gew.-%, insbesondere 1 bis 40 Gew.-%, Zusatzstoffe (F).

Unter dem Begriff Baubeschichtungsmittel werden dabei Beschichtungsmittel, wie Farben, Lasuren, Imprägniermittel oder Cremes verstanden, die sowohl für die Anwendung unmittelbar am Gebäude sowohl innen als auch außen gedacht sind, als auch solche, die auf den Anlagen zu Gebäuden wie etwa Außenanlagen gegebenenfalls im weiteren Sinne aufgebracht werden, d.h. im Beispiel der Außenanlagen etwa auf Verandas, Terrassen oder Außengeländern, und auf Grundstückseingrenzungen oder Umzäunungen, z.B. auch auf Weidezäunen, aufgebracht werden. Auch die Beschichtung von unverbauten Baustoffen, wie Ziegeln, Kalksandsteinen oder Betonsteinen, ist eingeschlossen. Solche Beschichtungen können porös oder filmbildend sein. Die meistverbreiteten Substrate sind mineralischer Natur und Holz. Daneben sind beispielsweise Metalle und Kunststoffe als Substrate einsetzbar.

Gegenstand der Erfindung ist auch ein Verfahren zur Behandlung von Baustoffen mit einem Baubeschichtungsmittel, das die wässrigen siliconharzhaltigen Organocopolymerdispersionen enthält, sowie die Verwendung der wässrigen siliconharzhaltigen Organocopolymerdispersionen als Baubeschichtungsmittel oder als Bestandteil in Baubeschichtungsmitteln.

Durch Funktionalisierung von Siliconharzen S mit olefinischen Gruppen lassen sich supervernetzende Bausteine erzeugen, welche als multifunktionelle Monomere bei der Copolymerisation mit ethylenisch ungesättigten Verbindungen fungieren können. Die Polymerisation kann im wässrigen Medium mit einer Emulsionspolymerisation durchgeführt werden und führt zu stabilen, hydrophob modifizierten Copolymerdispersionen. Es resultieren auf diese Weise je nach Funktionalisierungsgrad der Siliconharze schwach bis stark vernetzte Hybridpolymere. Diese zeichnen sich dadurch aus, dass die funktionalisierten Siliconharze an das organische Polymer über jeweils wenigstens eine C-C-Bindung gebunden sind und im Vergleich zu Systemen, die nur lineare, schwach vernetzende Einheiten aufweisen, zusätzlich einen erhöhten mechanischen Widerstand zeigen.

Im Vergleich zu Systemen, die nur durch Bildung von Si-O-Si-Bindungen vernetzen, weisen die erfindungsgemäßen Dispersionen aufgrund der Polymeranteile eine erhöhte Umwelt- und Chemikalienresistenz auf, beispielsweise gegenüber stark saurem oder alkalischem Milieu.

Diese Resistenz kann noch gesteigert werden, wenn durch zusätzliche Anwesenheit von Silanol- und/oder Alkoxygruppen neben der Anknüpfung des Siliconharzes an die organische Matrix über Si-C-Bindungsbildung eine zusätzliche Vernetzung zwischen den Siliconharzmolekülen durch Si-O-Si-Bindungsbildung erfolgt. Werden durch Zusatz von radikalisch polymerisierbaren Silanen zusätzlich Alkoxysilyl- und/oder Silanolfunktionen in die Polymerseitenketten eingebaut, so kann eine zusätzliche Nachvernetzung auch durch Si-O-Si-Bindungsbildung zwischen Siliconharzen S und Seitenkette oder zwischen Seitenkette und Seitenkette erfolgen.

Es ist dabei ein besonderes Kennzeichen und ein Vorteil der erfindungsgemäßen Siliconharz-Organocopolymer-Dispersionen, dass sie als Dispersion stabil sind und diese Nachvernetzung nicht während der Lagerung der Dispersion stattfindet. Dies wäre nachteilig, da es die Bildung niedermolekularer Alkohole als Abspaltungsprodukte zur Folge hätte, wodurch die Lagerstabilität der Dispersionen reduziert würde und die außerdem als Volatile Organic Content (VOC) eingestuft sind, was grundsätzlich unerwünscht ist. Um diesen Effekt weiter zu steigern, ist es bevorzugt, dass die Reste $R^2$ in den Siloxaneinheiten (I) mindestens 2 Kohlenstoffatome umfassen, in der bevorzugtesten Ausführungsform, besitzen sie genau 2 Kohlenstoffatome, wobei der bevorzugteste Rest $R^2$ der Ethylrest ist, so dass die siliziumgebundene Alkoxyfunktion die Ethoxygruppe ist.

In der Hydrolysestabilität der erfindungsgemäßen Siliconharz-Organocopolymeren ist insbesondere ein Vorteil der gammasilanmodifizierten Siliconharze (B) gegenüber den alphasilanmodifizierten Siliconharzen von US 7,674,868 B2 zu sehen. Die Alkoxygruppen von alpha-Silanen sind deutlich reaktiver als die von gamma-Silanen und lassen sich daher in wässriger Umgebung kaum stabil halten. Daher sind es in US 7,674,868 B2 auch besonders alkoxyarme alpha-Silane, die in den Beispielen verwendet werden, deren Alkoxygruppen während der Bildungsreaktion der modifizierten Siliconharze möglichst vollständig verbraucht werden.

**Präparative Beispiele:**

Im vorliegenden Text werden Stoffe durch Angabe von Daten charakterisiert, die mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier nachfolgend angegeben.

In allen Beispielen beziehen sich alle Angaben von Teilen und Prozentsätzen auf das Gewicht, falls nicht anders angegeben.

**Viskosität:**

Die Viskositäten werden, wenn nicht anders angegeben, durch rotationsviskosimetrische Messung gemäß DIN EN ISO 3219 bestimmt. Falls nicht anders angegeben, gelten alle Viskositätsangaben bei 25°C und Normaldruck von 1013 mbar.

**Brechungsindex:**

Die Brechungsindices werden im Wellenlängenbereich des sichtbaren Lichtes bestimmt, falls nicht anders angegeben bei 589 nm bei 25°C und Normaldruck von 1013 mbar gemäß der Norm DIN 51423.

**Transmission:**

Die Transmission wird durch UV VIS Spektroskopie bestimmt. Ein geeignetes Gerät ist beispielsweise das Analytik Jena Specord 200.

Die verwendeten Messparameter sind: Bereich: 190 - 1100 nm Schrittweite: 0,2 nm, Integrationszeit: 0,04 s, Messmodus: Schrittbetrieb. Als erstes erfolgt die Referenzmessung (Background). Eine Quarzplatte befestigt an einem Probenhalter (Dimension der Quarzplatten: HxB ca. 6 x 7 cm, Dicke ca. 2,3 mm)

wird in den Probenstrahlengang gegeben und gegen Luft gemessen. Danach erfolgt die Probenmessung. Eine am Probenhalter befestigte Quarzplatte mit aufgetragener Probe - Schichtdicke aufgetragene Probe ca. 1 mm - wird in den Probenstrahlengang gegeben und gegen Luft gemessen. Interne Verrechnung gegen Backgroundspektrum liefert das Transmissionsspektrum der Probe.

**Molekülzusammensetzungen:**

Die Molekülzusammensetzungen werden mittels

Kernresonanzspektroskopie bestimmt (zu Begrifflichkeiten siehe ASTM E 386: Hochauflösende magnetische Kernresonanzspektroskopie (NMR): Begriffe und Symbole), wobei der $^1$H-Kern und der $^{29}$Si-Kern vermessen wird.

**Beschreibung $^1$H-NMR Messung**

Solvent: CDCl3, 99,8%d
Probenkonzentration: ca. 50 mg / 1 ml CDCl3 in 5 mm NMR-Röhrchen

Messung ohne Zugabe von TMS, Spektrenreferenzierung von Rest-CHCl3 in CDCl3 auf 7,24 ppm

Spektrometer: Bruker Avance I 500 oder Bruker Avance HD 500
Probenkopf: 5 mm BBO-Probenkopf oder SMART-Probenkopf (Fa. Bruker)

Meßparameter:

Pulprog = zg30
TD = 64k
NS = 64 bzw. 128 (abhängig von der Empfindlichkeit des Probenkopfes)
SW = 20,6 ppm
AQ = 3,17 s
D1 = 5 s
SFO1 = 500,13 MHz
O1 = 6,175 ppm

Processing-Parameter:

SI = 32k
WDW = EM
LB = 0,3 Hz

Je nach verwendetem Spektrometertyp sind evtl. individuelle Anpassungen der Messparameter erforderlich.

**Beschreibung $^{29}$Si-NMR Messung**

| | |
|---|---|
| Solvent: | C6D6 99,8%d/CCl4 1:1 v/v mit 1Gew% Cr(acac)$_3$ als Relaxationsreagenz |
| Probenkonzentration: | ca. 2 g / 1,5 ml Solvent in 10 mm NMR-Röhrchen |
| Spektrometer: | Bruker Avance 300 |
| Probenkopf: | 10 mm 1H/13C/15N/29Si glasfreier QNP-Probenkopf (Fa. Bruker) |

Messparameter:

Pulprog = zgig60
TD = 64k
NS = 1024 (abhängig von der Empfindlichkeit des Probenkopfes)
SW = 200 ppm
AQ = 2,75 s
D1 = 4 s
SFO1 = 300,13 MHz
O1 = -50 ppm

Processing-Parameter:

SI = 64k
WDW = EM
LB = 0,3 Hz

Je nach verwendetem Spektrometertyp sind evtl. individuelle Anpassungen der Messparameter erforderlich.

**Molekulargewichtsverteilungen:**

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechnungsindexdetektor (RI-Detektor). Wo nicht anders ausgewiesen wird THF als Eluent verwendet und DIN 55672-1 angewendet. Die Polydispersität ist der Quotient Mw/Mn.

**Glasübergangstemperaturen:**

Die Glasübergangstemperatur wird nach Dynamischer Differenzkalorimetrie (Differential Scanning Calorimetry, DSC) nach DIN 53765, gelochter Tigel, Aufheizrate 10 K/min bestimmt.

**Bestimmung der Teilchengröße:**

Die Partikelgrößen wurden nach der Methode der Dynamic Light Scattering (DLS) unter Bestimmung des Zetapotenzials gemessen. Für die Bestimmung wurden folgende Hilfsmittel und Reagenzien verwendet: Polystyrolküvetten 10 x 10 x 45 mm, Pasteurpipetten für den Einmalgebrauch, Ultra reines Wasser.
Die zu vermessende Probe wird homogenisiert und blasenfrei in die Messküvette eingefüllt.
Die Messung erfolgt bei 25°C nach einer Äquilibrierzeit von 300s mit hoher Auflösung mit automatischer Messzeiteinstellung.
Die angegebenen Werte beziehen sich immer auf den Wert D(50). D(50) ist als volumengemittelter Partikeldurchmesser zu verstehen, bei dem 50% aller gemessenen Partikel einen volumengemittelten Durchmesser kleiner als der ausgewiesene Wert D(50) aufweisen.

**Bevorzugter Herstellprozess für die ethylenisch ungesättigten Siliconharze: Silanmodifizierung alkoxyfunktioneller Siliconharze.**

**Beispiel 1:** diskontinuierliche Herstellung eines ethylenisch ungesättigten Siliconharzes (B) durch Cokondenstation eines ethoxyfunktionellen Siliconharzes S mit (Trimethoxy) (propylmethacryloyloxy)silan $(CH_3O)_3Si(CH_2)_3OC(=O)C(CH_3)=CH_2$

In einem 4 l Vierhalskolben, der mit einem Kühler, einer Destillationsbrücke, Thermometer und Rührer ausgestattet ist, werden 900 g Ethanol, 186 g vollentsalztes Wasser, 3,48 g einer wässrigen 20%-igen Salzsäurelösung, 202,3 g Phenyltriethoxysilan und 77,1 g (Trimethoxy)(propylmethacryloyloxy)silan eingewogen und vermischt. Zu dieser Mischung werden 1080 g eines Siliconharzes das zu 98 mol-% aus $MeSiO_{3/2}$-Einheiten (= T-Einheiten) und zu 2 mol-%

aus $Me_2SiO_{2/2}$-Einheiten (= D-Einheiten) besteht, wobei 36 Gew.-% EtO-Reste statistisch auf die T-Einheiten verteilt sind, das ein Molekulargewicht Mw von 2560 g/mol und eine Viskosität von 25 mPas bei 25°C besitzt, innerhalb von 10 min unter Rühren zugegeben.

Danach wird innerhalb von 28 min auf 79°C aufgeheizt, so dass ein Rückfluss aus Ethanol entsteht. Man lässt 15 min bei dieser Temperatur rühren, neutralisiert danach durch Zugabe von 53,4 g einer Lösung hergestellt durch Vermischen von 3,4 g 30%-iger Natriummethylatlösung in Methanol und 50 g Ethanol. Die so erhaltene Lösung wird durch Abdestillieren bei 10mbar und 80°C von allen flüchtigen Bestandteilen befreit. Man erhält 930 g eines bei 25°C leicht klebrigen festen Siliconharzes (B) das folgende Eigenschaften aufweist:

Molekulargewicht und Uneinheitlichkeit:

Mw = 5400 g/mol
Mn = 2160 g/mol
PD = 2,5

Molekulare Zusammensetzung aus $^1$H-NMR und $^{29}$Si-NMR:

$PhSiO_{3/2}$ + $MeSiO_{3/2}$ + $((CH_2)_3OC(=O)C(CH_3)=CH_2)SiO_{3/2}$: 64, 65 mol-%
$PhSi(OEt)O_{3/2}$: 4,8 mol-%
$Me/((CH_2)_3OC(=O)C(CH_3)=CH_2)Si(OEt/OMe)O_{2/2}$: 29,7 mol-%
$Me/((CH_2)_3OC(=O)C(CH_3)=CH_2)Si(OEt/OMe)_2O_{1/2}$: 0,85 mol-%
Ethoxygehalt: 17,7 Gew.-%,
1,4 Gew.-% siliziumgebundene OH-Gruppen
0,1 Gew.-% Si-gebundene MeO-Gruppen
5,16 Gew.-% Si-gebundene EtO-Gruppen
5,75 Gew.-% Si-gebundene $-(CH_2)_3OC(=O)C(CH_3)=CH_2)$ Gruppen

**Vergleichsbeispiel 1: Herstellung eines nicht erfindungsgemäßen alpha-Silan-modifizierten olefinisch ungesättigten Siliconharzes**

Gemäß der Vorgehensweise von Beispiel 1 wird ein nicht erfindungsgemäßes Siliconharz hergestellt durch Verwendung des alpha-Silans (Trimethoxy)(methylmethacryloyloxy)silan $(CH_3O)_3Si(CH_2)OC(=O)C(CH_3)=CH_2$ anstelle des gamma-Silans (Trimethoxy)(propylmethacryloyloxy)silan $(CH_3O)_3Si(CH_2)_3OC(=O)C(CH_3)=CH_2$. Ansonsten ist die Vorgehensweise die gleiche.

Man erhält 903 g eines bei 25°C leicht klebrigen festen Siliconharzes das folgende Eigenschaften aufweist:

Molekulargewicht und Uneinheitlichkeit:

Mw = 4500 g/mol
Mn = 2060 g/mol
PD = 2,2

Molekulare Zusammensetzung aus $^1$H-NMR und $^{29}$Si-NMR:

$PhSiO_{3/2}$ + $MeSiO_{3/2}$ + $((CH_2)OC(=O)C(CH_3)=CH_2)SiO_{3/2}$: 65, 18 mol-%
$PhSi(OEt)O_{3/2}$: 4,5 mol-%
$Me/((CH_2)OC(=O)C(CH_3)=CH_2)Si(OEt/OMe)O_{2/2}$: 29, 54 mol-%
$Me/((CH_2)OC(=O)C(CH_3)=CH_2Si(OEt/OMe)_2O_{1/2}$: 0,78 mol-%
Ethoxygehalt: 16,5 Gew.-%,
1,3 Gew.-% siliziumgebundene OH-Gruppen
0,1 Gew.-% Si-gebundene MeO-Gruppen
4,96 Gew.-% Si-gebundene EtO-Gruppen
5,68 Gew.-% Si-gebundene $-(CH_2)OC(=O)C(CH_3)=CH_2)$ Gruppen

**Beispiel 2:** Kontinuierliche Herstellung eines ethylenisch ungesättigten Siliconharzes (B) durch Cokondenstation eines ethoxyfunktionellen Siliconharzes S mit (Trimethoxy)(propylmethacryloyloxy) silan $(CH_3O)_3Si(CH_2)_3OC(=O)C(CH_3)=CH_2$:

Als Apparatur wird eine kontinuierliche Alkoxylierungsanlage verwendet, bestehend aus einem Loop-Vorreaktor (Schritt 1) mit einem Füllvolumen von 2 l und einem 2,5 l großen Umlaufverdampfer mit aufgesetzter 5 m langer Reaktionskolonne mit einer lichten Weite von 50 mm (Schritt 2), in der die Alkoxylierung der als Rohstoffe eingesetzten Chlorsilane abläuft, gefolgt von einem Loop-Reaktor (Schritt 3) mit einem Füllvolumen von 1,5 l, in dem die Cokondensation des aus dem Kolonnenschritt erhältlichen Siliconharzes mit dem methacrylatfunktionellen Silan durchgeführt wird.

Der Vorreaktor wird mit 1500 g eines Gemisches aus 150 g Isooctyltrichlorsilan und 1350 g Methyltrichlorsilan befüllt. Der Umlaufverdampfer wird mit 2000 g Ethanol befüllt und auf eine Sumpftemperatur von 78°C (Rückfluss Ethanol) eingestellt. Der Reaktionsloop mit 1,5 Liter Füllvolumen wird mit einem Gemisch bestehend aus gleichen Gewichtsteilen des aus den Schritten 1 und 2 erhältlichen alkoxyoligomeren Polyorganosiloxans und Ethanol befüllt, auf 60°C erhitzt und dabei umgepumpt.

Das Chlorsilangemisch im Vorreaktor wird umgepumpt und 500 g Ethanol zudosiert. In der Folge wird die Dosierung in den Vorreaktor so eingestellt, dass stets 1500 g/h eines Gemisches bestehend aus 1 Teil Isooctyltrichlorsilan und 9 Teilen Methyltrichlorsilan sowie 500 g /h Ethanol zudosiert werden.

Im Vorreaktor wird das Chlorsilangemisch teilalkoxyliert, wobei die dabei entstehende HCl als Nebenprodukt der Reaktion über eine Abgasleitung entweicht.

Das Reaktionsgemisch wird nach dem Vorreaktor auf das obere Drittel der Reaktionskolonne aufgegeben. Zusätzlich werden dem Reaktionssystem 500 g/h Ethanol und 140 g/h Wasser über den Sumpf der Reaktionskolonne zugeführt und auf Rückfluss (Ethanol SDP: 78°C) erhitzt.

Das vom Vorreaktor kommende Teilalkoxylat reagiert mit entgegenströmendem Ethanol zum Alkylsilantrialkoxylat ab und wird im Sumpf der Reaktionskolonne durch das Wasser zum Oligomer kondensiert. Der Oligomerisierungs- bzw. Polymerisationsgrad ist über die eingesetzte Wassermenge steuerbar.

Das anfallende Kopfdestillat der Reaktionskolonne wird kondensiert und kurz unterhalb der Einspeisestelle des Reaktionsgemisches aus dem Vorreaktor auf die Kolonne zurückgegeben. Es wird nicht in den Sumpf der Reaktionskolonne eingespeist oder einer Stelle in der Kolonne, die näher am Sumpf liegt, als die angegebene Dosierstelle. Dies geschieht um zu vermeiden, dass eine zu hohe Menge Säurerücklauf in den Sumpf gelangt und die Kondensationsreaktion dort unkontrollierbar macht.

Somit wird die dabei frei werdende HCl vollständig über Abgasleitung aus dem Reaktionssystem abgeführt mit der Folge dass das aus dem Sumpf der Reaktionskolonne zu entnehmende hier sogenannte Siliconharzintermediat ohne weitere Aufarbeitung mit kleiner 100 ppm Rest-HCl-Gehalt (titrierbar) anfällt. Das so im Sumpf der Reaktionskolonnen hergestellte Siliconharzintermediat kann falls gewünscht dem Sumpf der Reaktionskolonne entnommen und analytisch charakterisiert werden. Es zeichnet sich durch niedrige Viskosität ($< 100$ mm$^2$/s) sowie hohe Restalkoxygehalte von $> 20$ Gew.% aus.

In einem typischen Beispiel wurden folgende analytische Daten für das Siliconharzintermediat erhalten: Molekulare Zusammensetzung aus $^{29}$Si-NMR:

$MeSiO_{3/2}$ + $^{i}OctSiO_{3/2}$: 12, 6 mol-%,
$MeSi(OEt) O_{2/2}$ + $^{i}OctSi(OEt)O_{3/2}$: 51,4 mol-%,
$MeSi(OMe)_2O_{1/2}$ + $^{i}OctSi(OEt)_2O_{3/2}$: 29,3 mol-%,
$MeSi(OMe)_3$ + $^{i}OctSi(OEt)_3$: 5,49 mol-%
$Me_2SiO_{2/2}$: 0,91 mol-% (aufgrund von geringen Gehalten von Dimethyldichlorsilan in Methyltrichlorsilan)
$Me_2Si(OEt)O_{1/2}$: 0,3 mol-% (aufgrund von geringen Gehalten von Dimethyldichlorsilan in Methyltrichlorsilan)
Ethoxygehalt: 36,6 Gew.-%,
Gehalt $^{i}OctSi(OEt)_{0-3}O_{3-0/2}$: 8,9 Gew.-%

| | |
|---|---|
| Mw: | 1600 g/mol |
| Mn: | 800 g/mol |
| PD: | 2,0 |

Das Reaktionsprodukt aus dem Sumpf der Reaktionskolonne wird im Maße seiner Bildung in den Reaktionsloop eingeleitet. Dabei besteht das Reaktionsprodukt aus dem Sumpf der Kolonne aus einem Gemisch aus gleichen Teilen Ethanol und Siliconharzintermediat, wie es für die Befüllung des Reaktionsloops verwendet wurde. Die durchschnittliche Dosierrate für dieses 50%-ige Gemisch beträgt hierbei 1200 g/h. Zusätzlich werden an einer weiteren Dosierstelle 36 g/h (Trimethoxy)(propylmethacryloyloxy)silan kontinuierlich zudosiert.

Zu dieser Vorlage im Reaktionsloop werden 50 g einer 1,3 Gew.-%-igen wässrigen Salzsäurelösung zudosiert, um die Cokondensationsreaktion zu starten.

Das Siliconharzintermediat aus dem Sumpf der Reaktionskolonne wird in Folge zusammen mit salzsaurem Wasser (200 g/h einer 1,3 Gew.-%-igen wässrigen HCl Lösung)und dem (Trimethoxy)(propylmethacryloyloxy)silan in dem Maße in den Reaktionsloop zugeführt, wie kondensiertes Endprodukt aus dem Reaktionsloop abgeführt wird.

Dabei sind die Eduktströme so bemessen, dass sich eine mittlere Verweilzeit von 15 Minuten sowie ein Festgehalt (gelöstes Harz in Alkohol) von 35-40% einstellt.

Das so entstandene kondensierte, HCl-saure Loop-Endrodukt wird mittels einer 30%-igen Lösung Natriummethylat in Methanol neutralisiert und anschließend filtriert.

Danach wird die alkoholische Endproduktlösung destilliert und man erhält ein flüssiges Endprodukt das sich durch Produktparameter wie Viskosität, Restalkoxygehalt sowie Molekulargewichts-verteilung definiert. In einem typischen Beispiel wurden folgende analytischen Daten erhalten:

Molekulare Zusammensetzung aus $^1$H-NMR und $^{29}$Si-NMR:

$MeSiO_{3/2}$ + $^iOctSiO_{3/2}$ + $((CH_2)_3OC(=O)C(CH_3)=CH_2)SiO_{3/2}$: 53, 6 mol-%, $MeSi(OEt)O_{2/2}$ + $^iOctSi(OEt)O_{2/2}$ + $((CH_2)_3OC(=O)C(CH_3)=CH_2)Si(OMe)O_{2/2}$: 40, 6 mol-%,

$MeSi(OEt)_2O_{1/2}$ + $^iOctSi(OEt)_2O_{1/2}$ + $((CH_2)_3OC(=O)C(CH_3)=CH_2)Si(OMe)_2O_{1/2}$: 5, 0 mol-%,

$Me_2SiO_{2/2}$: 0, 80 mol-% (aufgrund von geringen Gehalten von Dimethyldichlorsilan in Methyltrichlorsilan)

Ethoxygehalt: 7,3 Gew.-%,

Methoxygehalt: 0,12 Gew.-%

Silanolgehalt (= Si-OH): 4,14 Gew.-%

Isooctylanteil: 11,9 Gew.-%

5, 51 Gew.-% Si-gebundene - $(CH_2)_3OC(=O)C(CH_3)=CH_2$ Gruppen weitere Produktparameter:

| | |
|---|---|
| Viskosität: | 3800 mm$^2$/s |
| Mw: | 1900 g/mol |
| Mn: | 600 g/mol |
| PD: | 3,2 |

**Beispiel 3:** Diskontinuierliche Herstellung eines ethylenisch ungesättigten Siliconharzes (B) durch Cokondenstation eines ethoxyfunktionellen Siliconharzes S mit (Trimethoxy) (propylmethacryloyloxy)silan $(CH_3O)_3Si(CH_2)_3OC(=O)C(CH_3)=CH_2$

In einen 4 l Vierhalskolben, der mit einem Kühler, einer Destillationsbrücke, Thermometer und Rührer ausgestattet ist, werden 720 g Tetraethylsilikat-Oligomer mit einem durchschnittlichen Oligomerisierungsgrad von 9 mit 292,80 g Hexamethyldisiloxan, 48 g (Trimethoxy)(propylmethacryloyloxy)silan und 250,56 g eines niederviskosen, OHterminierten Polydimethylsiloxans mit durchschnittlichen 45 Siloxaneinheiten bei 23°C vermischt. Zu dieser Vorlage gibt man rasch zuerst 176,00 g vollentsalztes Wasser und dann 1,28 g einer 25%-igen wässrigen Salzsäurelösung zu. Man erhitzt auf 60°C. Bei dieser Temperatur springt die Reaktion exotherm an und erhitzt sich selbsttätig auf 75°C. Man heizt bis auf 79°C weiter auf und hält für 1 h bei dieser Temperatur am Rückfluss. Anschließend wird auf 50°C abgekühlt, langsam Vakuum angelegt und 300 g Ethanol abdestilliert. Dem erhaltenen Produktgemisch gibt man 0,8 g 25%-ige wässrige NaOH-Lösung zu, so dass sich ein Rest-HCl-Gehalt von 5 - 20 ppm einstellt. Anschließend werden 320 g Butylacrylat zugesetzt, 100 g Dicalite 4258 Filterhilfsmittel (Lieferant Dicalite Europe, Belgien) zugegeben und über eine Seitz K 100 Filterplatte filtriert. Zu dem Filtrat setzt man 0,32 g EETHANOX 4703 (= 2,6 Di-tert. butylalpha-dimethylamino-p-cresol, Lieferant AlbemarleEurope SPRL, Belgien) zu und destilliert anschließend alle flüchtigen Bestandteile bei 60°C und 20 mbar ab. Man erhält 992 g einer klaren Siliconharzlösung in Butylacrylat, bestehend aus 39,3 Gew.-% Butylacrylat und 60,7 Gew.-% Siliconharz.

Das Siliconharz hat gemäß $^1$H-NMR und $^{29}$Si-NMR folgende Zusammensetzung:

$Me_3SiO_{1/2}$: 29,8 mol-%

$Me_2SiO_{2/2}$: 25,5 mol-%

$Me/((CH_2)_3OC(=O)C(CH_3)=CH_2)SiO_{3/2}$: 0,4 mol-%

$Me/((CH_2)_3OC(=O)C(CH_3)=CH_2)SiO_{3/2}$: 1,1 mol-%

$Si(OEt/OMe)_2O_{4/2}$: 1,6 mol-%

$Si(OEt/OMe)O_{4/2}$: 17,7 mol-%

$SiO_{4/2}$: 23,9 mol-%

EtO-Si: 1,97 Gew.-%
MeO-Si: 0,03 Gew.-%
Si-OH: 1,4 Gew.-%

Molekulargewicht und Uneinheitlichkeit:

Mw = 4050 g/mol
Mn = 1450 g/mol
PD = 2,8

**Beispiel 4: Herstellung von Miniemulsionen aus den Siliconharzen aus Beispiel 1 und Beispiel 2:**

Die Miniemulsion wird hergestellt, indem das jeweilige Siliconharz in der Mischung der Monomeren gelöst wird, die der Zusammensetzung des späteren organischen Polymeranteils entspricht und danach homogenisiert wird. Zur Homogenisierung können bekannte Homogenisiermethoden wie das Dispergieren mit Dissolvern, Turrax oder Hochdruckhomogenisatoren angewendet werden. Das Ziel des Homogenisiervorgangs ist es dabei stets eine Partikelgröße von D(50) ≤ 200 nm zu erzielen. Je nach Zusammensetzung der Zubereitung eignen sich unterschiedliche Dispergiermethoden. Hier wurden zur Illustration Beispiele ausgewählt, die einen laborüblichen Turrax als Dispergieraggregat verwenden.

Herstellung der Acrylat- und Methacrylatmonomermischung

Folgende Monomere werden in den angegeben Mengenverhältnis in einem Gefäß mit Rührer vermischt:

| | | |
|---|---|---|
| Butylacrylat (BA) | 750 | g |
| Methylmethacrylat (MMA) | 505 | g |
| Butylmethacrylat (BMA) | 221 | g |
| Styrol | 126 | g |
| Methacrylsäure (MAS) | 35 | g |
| Gesamt: | 1637 | g |

Herstellung der Abmischung mit dem Siliconharz:

| | |
|---|---|
| 195 g | Siliconharz gemäß Beispiel 1 oder gemäß Beispiel 2 |
| 455 g | (Meth)Acrylatmischung wie oben angegeben |
| 650 g | gesamt |

werden in einem rührbaren Gefäß miteinander vermischt. Es entsteht eine (Meth)acrylatmonomeren-Siliconharz-Lösung mit 30 Gew.-% Siliconharz.

Herstellung der Miniemulsion am Turrax:

| 1. | IT 16 = Polyoxyethylen (16) isotridecylether (nichtionischer Emulgator, Hersteller Cognis GmbH, Illertissen) | 62,6 | g |
|---|---|---|---|
| 2. | (Meth)acrylatmischung mit Siliconharz wie oben angegeben | 650 | g |
| 3. | Hexadekan | 4,44 | g |
| 4. | HQME (4-Methoxyphenol) | 3,0 | g |
| 5. | VE-H2O (vollentsalztes Wasser) | 391,8 | g |
| | Gesamt | 1101,8 | g |

Vorgehensweise:

Die Zubereitungsbestandteile für die Emulsion werden in einem geeigneten Gefäß vermischt und für 10 min.

bei 8000 U/min. am Turrax dispergiert.

Verwendet man Siliconharz gemäß Beispiel 1 erhält man bei diesem Vorgang eine Miniemulsion mit einer Partikelgröße von D(50) = 197 nm.

Verwendet man Siliconharz gemäß Beispiel 2 erhält man bei diesem Vorgang eine Miniemulsion mit einer Partikelgröße von D(50) = 189 nm.

In beiden Fällen handelt es sich um Miniemulsionen mit den angestrebten D(50) ≤ 200 nm.

**Vergleichsbeispiel 2: Herstellung einer nicht erfindungsgemäßen Miniemulsion enthaltend das Siliconharz gemäß Vergleichsbeispiel 1**

Gemäß der Vorgehensweise von Beispiel 4, wird eine Miniemulsion unter Verwendung des nicht erfindungsgemäßen Siliconharzes aus Vergleichsbeispiel 1 hergestellt.
Man erhält eine Miniemulsion mit einer Teilchengröße von D(50) = 193 nm.

Man lässt jeweils eine Probe der Miniemulsion, die das Harz aus Beispiel 1 enthält und eine Probe der Miniemulsion, die das Harz aus Vergleichsbeispiel 1 enthält 2 Wochen bei Raumtemperatur von durchschnittlich 22°C stehen. Nach 2 Wochen ist die Miniemulsion, die das Harz aus Beispiel 1 enthält, unverändert. In der Probe, die die Miniemulsion aus Vergleichsbeispiel 1 enthält, hat sich ein Bodensatz gebildet, der sich zwar aufschütteln lässt, aber rasch wieder absetzt. Der sedimentierende Anteil der Miniemulsion mit dem Harz aus Vergleichsbeispiel 1 wird über eine 100 μm Filterplatte isoliert und versucht in Aceton zu lösen. Es wird eine trübe Mischung erhalten, was zeigt, dass es sich bei dem gebildeten Niederschlag um ein vernetztes nicht mehr lösliches Produkt handelt. Dieses Phänomen ist auf die Vernetzungsneigung der Alkoxygruppen zurückzuführen, die an den Siliciumatomen gebunden sind, die durch die alpha-Silane eingebracht wurden. Diese hydrolysieren in wässriger Zubereitung und bilden durch irreversible Kondensation unlösliche Produkte, die für eine etwaige Anwendung in Beschichtungsmitteln unbrauchbar sind. Die Lagerfähigkeit der Miniemulsion, die das Harz aus Beispiel 1 enthält, ist vergleichsweise dazu über den Prüfungszeitraum gegeben. Die Miniemulsion, die das Harz aus Beispiel 1 enthält, war nach 4 Wochen bei Raumtemperatur von durchschnittlich 22°C immer noch unverändert.

**Beispiel 5: Copolymerisation nach dem Verfahren der Miniemulsionspolymerisation:**

In einem 1000 ml-Polymerisationsgefäß mit Ankerrührer wurden 0,12 g Ethylendiamintetraacetat (EDTA) Dinatriumsalz
0,12 g Eisen(II)ammoniumsulfat Hexahydrat
92,4 g vollentsalztes Wasser und
83,5 g der Miniemulsion aus Beispiel 4 enthaltend das Siliconharz aus Beispiel 1 vermischt (= Beispiel 5a) und auf 50°C erhitzt (Vorlage).
Die Vorgehensweise mit der Miniemulsion aus Beispiel 4 enthaltend das Siliconharz aus Beispiel 2 (= Beispiel 5b) ist hierzu identisch.

In einem ersten Gefäß (Dosierung 1a) wurde eine 10 Gew.-%-ige Lösung von tert.-Butylhydroperoxid (TBHP) in Wasser hergestellt.

In einem zweiten Gefäß (Dosierung 1b) wurde eine 5 Gew.-%-ige Lösung von Natriumhydroxymethansulfinat (Brüggolit) in Wasser hergestellt.

In ein drittes Gefäß (Dosierung 2) wurden 660 g der oben beschriebenen Miniemulsion enthaltend das Siliconharz aus Beispiel 1 eingefüllt. Bei Verwendung der Miniemulsion mit dem Siliconharz aus Beispiel 2 ist die Vorgehensweise identisch.

Die Dosierraten werden wie folgt eingestellt:
Zulauf 1a und 1b wurden mit einer Dosiergeschwindigkeit von 105 μl/min gestartet und die Vorlage 20 Minuten bei 50°C polymerisiert. Anschließend wurde Zulauf 2 mit einer Dosiergeschwindigkeit von 4 ml/min gestartet und die Monomeremulsion innerhalb 165 min kontinuierlich zudosiert. Nach dem Ende der Dosierung (Zulauf 2) wurde die TBHP- und Brüggolitdosierung noch 1 Stunde fortgesetzt. Dann wurde auf Raumtemperatur abgekühlt und durch Zugabe von Ammoniakwasser auf einen pH-Wert von 8 eingestellt.

Dispersionsanalyse:

Feststoffgehalt: 49,1 %, Viskosität: 38 mPas;
Glasübergangstemperatur $T_g$: 4°C für Siliconharz 1 und 0°C für Siliconharz 2;
Dynamic Light Scattering Methode: mittlere Teilchengröße D(50): 189 nm für Siliconharz 1 und 176 nm für Siliconharz 2;
Verfilmung des Polymers: nach Abtrocknen durch Verdunsten des Wassers: schmierfreier weicher Film, kein Ausschwitzen von Silicon; Dispersionsfilm hat elastische Eigenschaften.

TEM-Aufnahmen (Ultramikrotom-Schnitt) des Films zeigen eine homogene Verteilung des Silicons in der Matrix mit Silicondomänen in den Größenordnungen 50 - 120 nm.

Es wird jeweils nur eine Glasübergangstemperatur beobachtet, nicht die individuelle Glasübergangstemperatur des organischen Polymeren und die des Siliconharzes getrennt. Das zeigt, dass es sich um ein echtes Copolymer handelt und zwar um ein statistisches Copolymer.

Damit ist zweierlei gezeigt. Zum einen funktioniert die Herstellung von solchen Copolymeren im Gegensatz zu dem, was der Stand der Technik hierzu lehrt, mit gamma-Silan-modifizierten Siliconharzen, wobei mit Vergleichsbeispiel 2 gezeigt wurde, dass die Miniemulsionen enthaltend gamma-Silan-modifizierte Siliconharze lagerstabil sind im Gegensatz zu alpha-Silan-modifizierten Siliconharzen und nicht dazu zwingen die frisch hergestellten Miniemulsionen sofort weiter zur Polymerdispersion umzusetzen. Damit sind die erfindungsgemäßen Miniemulsionen robust in ihrer Handhabung und alltagstauglich für eine reguläre Produktion.

Zum zweiten handelt es sich nicht um Pfropfcopolymere sondern um statistische Copolymere. Bei einem Pfropfcopolymer gemäß US 5, 618, 879 beobachtet man in der Regel keine gemittelten Eigenschaften, sondern die Eigenschaften der beiden individuell erhalten gebliebenen Polymeranteile,

Vergleichsbeispiel 3: Nicht erfindungsgemäße Polymerdispersion, enthaltend das nicht erfindungsgemäße Siliconharz gemäß Vergleichsbeispiel 1 und Vergleich der Lagerstabilität mit einer erfindungsgemäßen Polymerdispersion:

Gemäß der Vorgehensweise von Beispiel 5 wird eine Polymerdispersion aus einer frisch bereiteten Miniemulsion gemäß Vergleichsbeispiel 2 enthaltend das Siliconharz aus Vergleichsbeispiel 1 hergestellt.

Dispersionsanalyse:

Feststoffgehalt: 48,3 %, Vislzosität: 34 mPas;
Glasübergangstemperatur $T_g$: 3,4°C
Dynamic Light Scattering Methode: mittlere Teilchengröße D(50): 180 nm;
Verfilmung des Polymers: nach Abtrocknen durch Verdunsten des Wassers: schmierfreier weicher Film, kein Ausschwitzen von Silicon; Dispersionsfilm hat elastische Eigenschaften,

TEM-Aufnahmen (Ultramikrotom-Schnitt) des Films zeigen eine homogene Verteilung des Silicons in der Matrix mit Silicondomänen in den Größenordnungen 50 - 120 nm.

Die Polymerdispersion aus Vergleichsbeispiel 3, die das nichterfindungsgemäße alpha-Silan-modifizierte Siliconharz gemäß Vergleichsbeispiel 1 enthält, und die Polymerdispersion aus Beispiel 5 enthaltend das erfindungsgemäße gamma-Silan-modifizierte Siliconharz aus Beispiel 1 werden 8 Wochen bei 50°C in einem Trockenschrank gelagert. Nach dieser Zeit ist die Polymerdispersion enthaltend das gamma-Silan-modifizierte Siliconharz aus Beispiel 1 unverändert. Eine Lagerzeit von 6 - 12 Monaten bei Raumtemperatur von durchschnittlich ca. 22°C wäre damit zu erwarten. Die Polymerdispersion gemäß Vergleichsbeispiel 3 enthaltend das nicht erfindungsgemäße alpha-Silan-modifizierte Siliconharz gemäß Vergleichsbeispiel 1 hat nach 1 Woche Lagerung bei 50°C einen leichten nicht mehr aufrührbaren Bodensatz gebildet, der im Verlaufe der zweiten und dritten Lagerungswoche stetig zunimmt. Man beobachtet zudem ausgeprägte Serumbildung, d.h. die Dispersion hat sich getrennt und der darin enthaltene Wirkstoff ist vernetzt und als Bodensatz ausgefallen, während darüber eine abgetrennte wässrige Phase steht. Mit einer so kurzen Lagerfähigkeit hat ein solches Produkt keinen realen Gebrauchswert. Bei globaler Auslieferung würde es je nach Lieferstrecke unter Umständen nicht einmal die Zeit der Lieferung umfassend den Transport und die Abwicklung der notwendigen behördlichen Formalitäten überstehen, selbst bei Sicherstellung eines gekühlten Transportes.

**Beispiel 6: Herstellung einer Miniemulsion aus dem Siliconharz aus Beispiel 3:**

Folgende Komponenten werden in ein rührbares Gefäß gegeben und vermischt:

| | |
|---|---|
| 11,49 g | Hexadecan |
| 632,10 g | Butylacrylat |

(fortgesetzt)

| 461,40 g | MMA (Methylmethacrylat) |
| 201,90 g | BMA (Butylmethacrylat) |
| 114,90 g | Styrol |
| 269,40 g | Siliconharzlösung in Butylacrylat aus Beispiel 3 |

Zu der gerührten Mischung werden nacheinander folgende Zutaten dazugeschüttet:

| 1217,40 g | vollentsalztes Wasser |
| 7,89 g | HQME (4-Methoxyphenol) |
| 31,80 g | Methacrylsäure |
| 51,60 g | SDS (Natriumdodecylsulfat) |

Durchführung:

Die so erhaltene Voremulsion wird bei 800 - 900 bar Druck über einen Hochdruckhomogenisator mit medienbeständigen Ventilen homogenisiert.

Man erhält eine Emulsion mit einer Partikelgröße von D(50) = 173 nm.

**Beispiel 7: Copolymerisation nach dem Verfahren der Miniemulsionspolymerisation:**

Die Vorgehensweise und Dosiermengen entspricht exakt den in Beispiel 5 angegebenen, mit dem Unterschied, dass die Miniemulsion gemäß Beispiel 6 eingesetzt wird.

Dispersionsanalyse:

Feststoffgehalt: 43,1 %, Viskosität: 29 mPas;
Glasübergangstemperatur $T_g$: 6°C;
Dynamic Light Scattering Methode: mittlere Teilchengröße D(50): 109 nm;
Verfilmung des Polymers: nach Abtrocknen durch Verdunsten des Wassers: schmierfreier weicher klebfreier Film, kein Ausschwitzen von Silicon; Dispersionsfilm hat elastische Eigenschaften.

TEM-Aufnahmen (Ultramikrotom-Schnitt) des Films zeigen eine homogene Verteilung des Silicons in der Matrix mit Silicondomänen in den Größenordnungen 50 - 90 nm.

Es wird nur eine Glasübergangstemperatur beobachtet, nicht die individuelle Glasübergangstemperatur des organischen Polymeren und die des Siliconharzes getrennt. Das spricht dafür, dass es sich um ein echtes statistisches Copolymer handelt. Würden zwei getrennte Phasen vorliegen, würden beide Glasübergangstemperaturen getrennt beobachtet. Das gleiche gilt für ein Pfropfcopolymer gemäß US 5618879. Bei solchen Copolymeren beobachtet man in der Regel ebenfalls keine gemittelten Eigenschaften, sondern die Eigenschaften der beiden individuell erhalten gebliebenen Polymeranteile.

**Beispiel 8: erfindungsgemäßes Bautenschutzbeschichtungsmittel aus der Dispersion gemäß Beispiel 5b**

Als siliconharzhaltige Organocopolymerdispersion wurde in diesem Beispiel die gemäß Beispiel 5b (enthaltend das Siliconharz aus Beispiel 2) verwendet.
Es wurden zwei Bautenschutzbeschichtungsmittel mit unterschiedlichen Bindemittelgehalten und damit unterschiedlichen Pigmentvolumenkonzentrationen (PVK) hergestellt (siehe Tabelle 1).
Vermischt wurden in einem handelsüblichen, schnelllaufenden Rührwerk zur Herstellung von wässrigen Bautenschutzbeschichtungen.

Die Formulierung 1 ergibt eine poröse Beschichtung, da ihre Pigmentvolumenkonzentration (PVK) über der kritischen PVK liegt. Formulierung 2 ergibt einen geschlossenen Film.

**Tabelle 1: Bautenschutzbeschichtungsmittel**

| Formulierung | | **1** | **2** |
|---|---|---|---|
| Komponente | | 21,2% Bindemitteldispersion (Hohe PVK) | 35,7% Bindemitteldispersion (niedrige PVK) |
| | Name (Hersteller, Lieferant) | Mengen in g | |
| Wasser | | 296 | 176 |
| Topfkonservierer | Acticide MBS (Thor) | 2,0 | 2,0 |
| Filmkonservierer | Acticide MKB 3 (Thor) | 10,0 | 10,0 |
| Cellulose Verdicker | Tylose MH 30000 (Shin Etsu) | 3,0 | 3,0 |
| PU-Verdicker | Tafigel PUR 40 (Münzing) | 2,0 | 2,0 |
| Polyphosphat, Natriumsalz | Calgon N (BK Giuline) | 2,0 | 2,0 |
| Polyacrylat, Natriumsalz | Lopon 890 (BK Giuline) | 2,0 | 2,0 |
| Siliconantischaummittel | SILFOAM SD 860 (Wacker Chemie AG) | 3,0 | 3,0 |
| Titandioxid Pigment | Kronos 2190 (KRONOS) | 120,0 | 120,0 |
| Silikatischer Füllstoff (Alumosililkat) | OpTiMat 2550, (Lehmann & Voss) | 12,0 | 12,0 |
| Talkum (Talk Chlorit Dolomit) | Steopac (Luzenac) | 40,0 | 40,0 |
| Calciumcarbonat | Omyacarb 5 GU, (Omya) | 215,0 | 215,0 |
| Glimmer (Glimmer Quartz Chlorit) | Plastorit 000, (Luzenac) | 80,0 | 80,0 |
| Natronlauge, 10% | | 1,0 | 1,0 |
| erfindungsgemäße wässrige Siliconharzzubereitung gemäß Beispiel 5b | Beispiel 5b | 212 | 372 |
| Total: | | 1000 | 1040 |

Die Prüfung der Bautenschutzbeschichtungsmittel 1 und 2 auf ihre Gebrauchseigenschaften erfolgt gemäß nachfolgend Normvorschriften gemäß Tabelle 2:

**Tabelle 2: Normvorschriften**

| | Prüfnorm |
|---|---|
| Wasserdurchlässigkeitsrate (w24-Wert in $kg/m^2 h0,5$) | ISO 1062-3 |
| Scheuerbeständigkeit nach Konditionierung: Lagerung für 4d bei Normklima von 23°C und 50% relative Luftfeuchte | Messung gemäß DIN 53778-2 |
| Scheuerbeständigkeit nach 200 h QUV-B Bewitterung | Messung gemäß DIN 53778-2 |
| Oberflächenhydrophobie durch Abperleffekt | eigene Prüfvorschrift |

Vorgehensweise zur Bestimmung der Oberflächenhydrophobie:

Ein Wassertropfen (Volumen 1 ml) wird auf die zu prüfende Oberfläche aus einer Pipette aufgesetzt. Nach 10 min wird durch Sichtprüfung bewertet, wie gut der Tropfen die Oberfläche benetzt.

Bewertungssystem:

1 = der Wassertropfen perlt von einer schrägen Oberfläche (Neigung 30° gegen die Ebene) vollständig und rückstandsfrei ab.

2 = guter Abperleffekt aber einzelne kleine Wassertröpfchen bleiben an der Oberfläche hängen.

3 = der Wassertropfen perlt von einer schrägen Oberfläche (Neigung 30° gegen die Ebene) nur noch unvollständig ab.

4 = der Wassertropfen perlt von einer schrägen Oberfläche (Neigung 30° gegen die Ebene) nicht mehr ab.

5 = der Wassertropfen spreitet auf einer schrägen Oberfläche (Neigung 30° gegen die Ebene).

Folgende Ergebnisse werden erhalten und sind in Tabelle 3 zusammengefasst:

**Tabelle 3: Ergebnisse**

|  | 1 | 2 |
|---|---|---|
| $W_{24}$-Wert in kg/m$^2$h$^{0,5}$ | 0,08 | 0,03 |
| Scheuerbeständigkeit nach Konditionierung | > 10 000 | > 10 000 |
| Scheuerbeständigkeit nach QUV-B | > 10 000 | > 10 000 |
| Oberflächenhydrophobie | 4 | 4 |

Man erhält mit beiden Formulierungen Baubeschichtungen, die sowohl den Wasserdurchtritt sehr gut blockieren, als auch eine eher hydrophile Oberfläche bilden.

Außerdem wird ein sehr gutes mechanisches Ergebnis erzielt. Die Scheuerfestigkeit der Farben ist auf dem höchsten Niveau, das die angegebene Norm definiert. Dieses Niveau bleibt nach Bewitterung erhalten.

Das Ziel der Erfindung wird also erreicht:

Aus lagerstabilen Polymerdispersionen werden sowohl filmbildende als auch poröse Beschichtungen erhalten, mit guter Leistungsfähigkeit und insbesondere dem besonderen Effekt einer Kombination aus hydrophiler Oberfläche, die Wasser spreiten lässt und hydrophober innerer Phase des Films, die eine gute Wasserretention zur Folge hat. Das wird mit dem Auftrag nur einer Sorte von Beschichtungsmittel erreicht.

**Beispiel 9: Formulierungen von Bautenschutzbeschichtungsmitteln für den Auftrag auf Holzsubstrate (Dickschichtlasuren):**

Die in nachfolgender Tabelle 4 angegebenen Zubereitungen zur Herstellung von Dickschichtlasuren wurden durch Vermischen der Zubereitungskomponenten mit einem handelsüblichen schnelldrehenden Rühraggregat hergestellt.

Die Formulierung, die als "Control" bezeichnet wurde, enthält keine erfindungsgemäße Copolymerdispersion und ist damit nicht erfindungsgemäß. Sie dient in den nachfolgenden Anwendungsbeispielen als Vergleich zu den Formulierungen A - D, die erfindungsgemäße Copolymerdispersionen enthalten.

Tabelle 4: Dickschichtlasuren

| Komponente | Name (Hersteller) | Control [g] | A [g] | B [g] | c [g] | D [g] |
|---|---|---|---|---|---|---|
| Polyacrylatdispersion | Avanse™ ST-410 (Dow Chemical) | 138,89 |  |  | 125,00 | 125,00 |
| Erfindungsgemäße Copolymerdispersion gemäß Beispiel 7 | Beispiel 7 |  | 138,89 |  | 13,89 |  |

(fortgesetzt)

| Komponente | Name (Hersteller) | Control [g] | A [g] | B [g] | c [g] | D [g] |
|---|---|---|---|---|---|---|
| Erfindungsgemäße Copolymerdispersion gemäß Beispiel 5b | Beispiel 5b | | | 138,89 | | 13,89 |
| Vollentsalztes Wasser | | 61,50 | 61,50 | 61,50 | 61,50 | 61,50 |
| Siliconantischaummittel | TEGO® Foamex 805 (Evonik Industries) | 2,45 | 2,45 | 2,45 | 2,45 | 2,45 |
| Nichtionisches Netzmittel | Surfynol® 104DPM (Air Products) | 0,61 | 0,61 | 0,61 | 0,61 | 0,61 |
| Propylenglykol | | 3,79 | 3,79 | 3,79 | 3,79 | 3,79 |
| Microbizid | ROZONE™ 2000 (Dow Chemical) | 1,60 | 1,60 | 1,60 | 1,60 | 1,60 |
| UV Absorber | Ciba® Tinuvin® 1130 (Ciba) | 1,43 | 1,43 | 1,43 | 1,43 | 1,43 |
| UV-Absorber | Ciba® Tinuvin® 292 (Ciba) | 0,61 | 0,61 | 0,61 | 0,61 | 0,61 |
| Pigmentkonzentrat | TINT-AYD® CW-5600 red (Elementis Specialties) | 0,87 | 0,87 | 0,87 | 0,87 | 0,87 |
| Pigmentkonzentrat | TINT-AYD® CW-5499 yellow (Elementis Specialties) | 1,89 | 1,89 | 1,89 | 1,89 | 1,89 |
| Vollentsalztes Wasser | #2 Water, DI | 34,18 | 34,18 | 34,18 | 34,18 | 34,18 |
| PU-Verdicker | ACRYSOL™ RM-8W (Dow Chemical) | 2,18 | 2,18 | 2,18 | 2,18 | 2,18 |
| | Total: | 250,00 | 250,00 | 250,00 | 250,00 | 250,00 |

Die Wasserdurchlässigkeit der oben wiedergegebenen Formulierungen wurde vergleichend geprüft, wobei die Prüfmethode gemäß ASTM D4446/D4446M-13 verwendet wurde. Die Wasserdurchlässigkeit wird dabei in Prozent Quellung nach folgender Gleichung angegeben:

$$\% \text{ Quellung} = 100x \frac{\text{Quellung unbehandeltes Panel} - \text{Quellung behandeltes Panel}}{\text{Quellung unbehandeltes Panel}}$$

D.h. je größer der erhaltene Wert ist, desto größer ist das Wasserrückhaltevermögen. Die Norm fordert für eine gute Performance einen Wert von > 60%.

Folgende Ergebnisse wurden erhalten und sind in Tabelle 5 zusammengefasst:

**Tabelle 5: Ergebnisse**

| Testformulierung | Ergebnis gemäß ASTM D4446/D4446M-13 |
|---|---|
| Control | 24.5 |
| A | 65.2 |
| B | 75.3 |
| C | 68.5 |

(fortgesetzt)

| Testformulierung | Ergebnis gemäß ASTM D4446/D4446M-13 |
|---|---|
| D | 69.7 |

Alle Formulierungen, die unter Verwendung einer erfindungsgemäßen Copolymerdispersion erstellt wurden, übertreffen den von der Norm geforderten Wasserrückhaltewert.
Damit ist gezeigt, dass nicht nur auf mineralischem Substrat, sondern auch auf Holz leistungsstarke Beschichtungen erhalten werden, so dass die volle angestrebte Universalität erreicht wird.

**Patentansprüche**

1. Wässrige Dispersionen von Copolymerisaten von ethylenisch ungesättigten Monomeren und von ethylenisch funktionalisierten Siliconharzen erhältlich mittels radikalisch initiierter Miniemulsionspolymerisation in wässrigem Medium von

   (A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren,
   in Gegenwart von
   (B) mindestens einem Siliconharz, welches mit ethylenisch ungesättigten, radikalisch polymerisierbaren Gruppen funktionalisiert ist und aus Siloxaneinheiten der allgemeinen Formel

   $$[R^1_p(OR^2)_zSiO_{(4-p-z)/2}] \qquad (I)$$

   besteht,

   wobei $R^1$ gleich oder verschieden ist und einen Rest **R\*** oder **E** bedeutet, wobei

   **R\*** gleich oder verschieden ist, ein Wasserstoffatom, oder einen von aliphatischen C-C-Mehrfachbindungen freien Kohlenwasserstoffrest mit 1 bis 18 C-Atomen, welcher gegebenenfalls substituiert sein kann, bedeutet, und
   **E** einen ethylenisch ungesättigten Rest der Formel $-(CR^5_2)_m-X$,
   bedeutet, wobei

   m eine ganze Zahl von größer oder gleich 2 ist,
   $R^5$ ein Wasserstoffatom, einen $C_1$-$C_{12}$-Alkylrest oder einen $C_6$-$C_{18}$-Arylrest bedeutet, und
   X eine ethylenisch ungesättigte organische Gruppe bedeutet,

   wobei $R^1$ in mindestens 1 Mol-% und höchstens 50 Mol-% aller Siloxaneinheiten (I) einen ethylenisch ungesättigten Rest E bedeutet,

   $R^2$ gleich oder verschieden ist, und ein Wasserstoffatom oder einen Kohlenwasserstoffrest mit 1 bis 18 C-Atomen bedeutet,
   p 0, 1, 2 oder 3 ist und
   z 0, 1, 2 oder 3 ist,
   wobei die Summe p + z den Wert 0, 1, 2 oder 3 aufweist, mit der Maßgabe, dass bei mindestens 20 Mol-% aller Siloxaneinheiten der Formel (I) im Siliconharz (B) die Summe p+z 1 oder 0 ist, wobei p 1 oder 0 und z 0 ist,

   wobei die Miniemulsionspolymerisation durchgeführt wird, indem im ersten Schritt eine Lösung aus mindestens einem Siliconharz (B) in einem oder mehreren ethylenisch ungesättigten Monomeren (A) hergestellt wird, wobei eine Siliconharz-in-Monomer-Lösung erhalten wird,
   im zweiten Schritt die so erhaltene Siliconharz-in-Monomer-Lösung unter Verwendung von Emulgatoren, ggf. hydrophoben Coemulgatoren, und ggf. Polymerisationsinhibitoren, die die vorzeitige radikalische Emulsionspolymerisation verhindern, in Wasser so emulgiert wird, dass eine Miniemulsion mit einer Teilchengröße D(50) von höchstens 350 nm, vorzugsweise höchsten 300 nm, bevorzugt höchstens 250 nm, besonders bevorzugt höchstens 200 nm, erhalten wird, und im dritten Schritt die so erhaltene Miniemulsion einer radikalischen Emulsionspolymerisation unterworfen wird, wobei zur Durchführung der Miniemulsionspolymerisation wasserlösliche oder öllösliche oder eine Mischung von wasserlöslichen und öllöslichen Polymerisationsinitiatoren verwendet werden.

2. Wässrige Dispersionen nach Anspruch 1, **dadurch gekennzeichnet, dass**

E ein Rest der Formel -(CH$_2$)$_3$-X ist,
wobei X eine ethylenisch ungesättigte organische Gruppe bedeutet.

3. Wässrige Dispersionen nach Anspruch 1 oder 2, **dadurch gekennzeichnet, dass** X ein Acryl- oder Methacrylrest ist.

4. Wässrige Dispersionen nach Anspruch 1, 2 oder 3, **dadurch gekennzeichnet, dass** die Reste R* mindestens zwei verschiedene Reste sind ausgewählt aus der Gruppe der kohlenstoffreicheren Kohlenwasserstoffreste mit 6 bis 18 C-Atomen, vorzugsweise der Isooctyl- und der Phenylreste, und der kohlenstoffärmeren Reste mit 1 bis 3 C-Atomen, vorzugsweise der Methylreste.

5. Wässrige Dispersionen nach einem der Ansprüche 1 bis 4, **dadurch gekennzeichnet, dass** als ethylenisch ungesättigte Monomere ein oder mehrere Monomere aus der Gruppe Vinylacetat, Vinylester von α-verzweigten Monocarbonsäuren mit 9 bis 11 C-Atomen, Vinylchlorid, Ethylen, Methacrylsäure, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol und 1,3-Butadien eingesetzt werden.

6. Verfahren zur Herstellung der wässrigen Dispersionen von Copolymerisaten von ethylenisch ungesättigten Monomeren und von ethylenisch funktionalisierten Siliconharzen nach einem der Ansprüche 1 bis 5 mittels radikalisch initiierter Miniemulsionspolymerisation in wässrigem Medium von

(A) einem oder mehreren Monomeren aus der Gruppe umfassend Vinylester, (Meth)acrylsäureester, Vinylaromaten, Olefine, 1,3-Diene, Vinylether und Vinylhalogenide und gegebenenfalls weiteren damit copolymerisierbaren Monomeren,
in Gegenwart von
(B) mindestens einem Siliconharz, welches mit ethylenisch ungesättigten, radikalisch polymerisierbaren Gruppen funktionalisiert ist und aus Siloxaneinheiten der allgemeinen Formel

$$[R^1_p(OR^2)_zSiO_{(4-p-z)/2}] \qquad (I)$$

besteht,

wobei R$^1$ gleich oder verschieden ist und einen Rest **R*** oder **E** bedeutet, wobei

**R*** gleich oder verschieden ist, ein Wasserstoffatom, oder einen von aliphatischen C-C-Mehrfachbindungen freien Kohlenwasserstoffrest mit 1 bis 18 C-Atomen, welcher gegebenenfalls substituiert sein kann, bedeutet, und
**E** einen ethylenisch ungesättigten Rest der Formel -(CR$^5_2$)$_m$-X, bedeutet, wobei

m eine ganze Zahl von größer oder gleich 2 ist,
R$^5$ ein Wasserstoffatom, einen C$_1$-C$_{12}$-Alkylrest oder einen C$_6$-C$_{18}$-Arylrest bedeutet, und
X eine ethylenisch ungesättigte organische Gruppe bedeutet,

wobei R$^1$ in mindestens 1 Mol-% und höchstens 50 Mol-% aller Siloxaneinheiten (I) einen ethylenisch ungesättigten Rest E bedeutet,
R$^2$ gleich oder verschieden ist, und ein Wasserstoffatom oder einen Kohlenwasserstoffrest mit 1 bis 18 C-Atomen bedeutet,
p 0, 1, 2 oder 3 ist und
z 0, 1, 2 oder 3 ist,
wobei die Summe p + z den Wert 0, 1, 2 oder 3 aufweist, mit der Maßgabe, dass bei mindestens 20 Mol-% aller Siloxaneinheiten der Formel (I) im Siliconharz (B) die Summe p+z 1 oder 0 ist, wobei p 1 oder 0 und z 0 ist,

wobei die Miniemulsionspolymerisation durchgeführt wird, indem im ersten Schritt eine Lösung aus mindestens einem Siliconharz (B) in einem oder mehreren ethylenisch ungesättigten Monomeren (A) hergestellt wird, wobei eine Siliconharz-in-Monomer-Lösung erhalten wird,
im zweiten Schritt die so erhaltene Siliconharz-in-Monomer-Lösung unter Verwendung von Emulgatoren, ggf. hydrophoben Coemulgatoren, und ggf. Polymerisationsinhibitoren, die die vorzeitige radikalische Emulsionspolymerisation verhindern, in Wasser so emulgiert wird, dass eine Miniemulsion mit einer Teilchengröße D(50) von höchstens 350 nm, vorzugsweise höchsten 300 nm, bevorzugt höchstens 250 nm, besonders bevorzugt höchstens 200 nm, erhalten wird, und im dritten Schritt die so erhaltene Miniemulsion einer radikalischen Emulsionspolymerisation unterworfen wird, wobei zur Durchführung der Miniemulsionspolymerisation wasserlösliche oder öllösliche oder eine Mischung von wasserlöslichen und öllöslichen Polymerisationsinitiatoren verwendet werden.

7. Verfahren nach Anspruch 6, **dadurch gekennzeichnet, dass** E ein Rest der Formel -$(CH_2)_3$-X ist, wobei X eine ethylenisch ungesättigte organische Gruppe bedeutet.

8. Verfahren nach Anspruch 6 oder 7, **dadurch gekennzeichnet, dass** X ein Acryl- oder Methacrylrest ist.

9. Verfahren nach Anspruch 6, 7 oder 8, **dadurch gekennzeichnet, dass** die Reste R* mindestens zwei verschiedene Reste sind ausgewählt aus der Gruppe der kohlenstoffreicheren Kohlenwasserstoffreste mit 6 bis 18 C-Atomen, vorzugsweise der Isooctyl- und der Phenylreste, und der kohlenstoffärmeren Reste mit 1 bis 3 C-Atomen, vorzugsweise der Methylreste.

10. Verfahren nach einem der Ansprüche 6 bis 9, **dadurch gekennzeichnet, dass** als ethylenisch ungesättigte Monomere ein oder mehrere Monomere aus der Gruppe Vinylacetat, Vinylester von $\alpha$-verzweigten Monocarbonsäuren mit 9 bis 11 C-Atomen, Vinylchlorid, Ethylen, Methacrylsäure, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol und 1,3-Butadien eingesetzt werden.

11. Wässrige Baubeschichtungsmittel enthaltend wässrige Dispersionen von Copolymerisaten gemäß einem der Ansprüche 1 bis 5 oder hergestellt nach einem der Ansprüche 6 bis 10.

12. Verfahren zur Behandlung von Baustoffen mit wässrigen Baubeschichtungsmitteln enthaltend wässrige Dispersionen von Copolymerisaten gemäß einem der Ansprüche 1 bis 5 oder hergestellt nach einem der Ansprüche 6 bis 10.

13. Verfahren nach Anspruch 12, wobei der Baustoff Holz ist.

**Claims**

1. Aqueous dispersions of copolymers of ethylenically unsaturated monomers and of ethylenically functionalized silicone resins, obtainable by means of radically initiated miniemulsion polymerization in aqueous medium of

(A) one or more monomers from the group encompassing vinyl esters, (meth)acrylic esters, vinylaromatics, olefins, 1,3-dienes, vinyl ethers, and vinyl halides, and optionally further monomers copolymerizable therewith, in the presence of
(B) at least one silicone resin which is functionalized with ethylenically unsaturated, radically polymerizable groups and consists of siloxane units of the general formula

$$[R^1{}_p(OR^2)_z SiO_{(4-p-z)/2}] \qquad (I),$$

where $R^1$ is identical or different and is a radical **R*** or **E,** where

**R*** is identical or different and is a hydrogen atom or is a hydrocarbon radical which is free from aliphatic multiple C-C bonds, has 1 to 18 carbon atoms, and may optionally be substituted, and

**E** is an ethylenically unsaturated radical of the formula $-(CR^5_2)_m-X$, where

m is an integer greater than or equal to 2,
$R^5$ is a hydrogen atom, a $C_1$-$C_{12}$ alkyl radical or a $C_6$-$C_{18}$ aryl radical, and
X is an ethylenically unsaturated organic group,

where $R^1$ is an ethylenically unsaturated radical E in at least 1 mol% and at most 50 mol% of all siloxane units (I),
$R^2$ is identical or different and is a hydrogen atom or a hydrocarbon radical having 1 to 18 carbon atoms,
p is 0, 1, 2 or 3, and
z is 0, 1, 2 or 3,

where the sum p + z has a value of 0, 1, 2 or 3,
with the proviso that for at least 20 mol% of all siloxane units of the formula (I) in the silicone resin (B), the sum p+z is 1 or 0, with p being 1 or 0 and z being 0, the miniemulsion polymerization being carried out by preparation in the first step of a solution of at least one silicone resin (B) in one or more ethylenically unsaturated monomers (A), to give a silicone resin-in-monomer solution,
emulsification in the second step of the resulting silicone resin-in-monomer solution, using emulsifiers, optionally hydrophobic coemulsifiers, and optionally polymerization inhibitors which prevent premature radical emulsion polymerization, in water in such a way as to give a miniemulsion having a particle size D(50) of not more than 350 nm, preferably not more than 300 nm, more preferably not more than 250 nm, very preferably not more than 200 nm, and
subjection in the third step of the resulting miniemulsion to radical emulsion polymerization, where the miniemulsion polymerization is carried out using water-soluble or oil-soluble, or a mixture of water-soluble and oil-soluble, polymerization initiators.

2. Aqueous dispersions according to Claim 1, **characterized in that** E is a radical of the formula - $(CH_2)_3$-X, where X is an ethylenically unsaturated organic group.

3. Aqueous dispersions according to Claim 1 or 2, **characterized in that** X is an acrylic or methacrylic radical.

4. Aqueous dispersions according to Claim 1, 2 or 3, **characterized in that** the radicals R* are at least two different radicals selected from the group of carbon-richer hydrocarbon radicals having 6 to 18 carbon atoms, preferably isooctyl radicals and phenyl radicals, and carbon-poorer radicals having 1 to 3 carbon atoms, preferably methyl radicals.

5. Aqueous dispersions according to any of Claims 1 to 4, **characterized in that** ethylenically unsaturated monomers used are one or more monomers from the group of vinyl acetate, vinyl esters of $\alpha$-branched monocarboxylic acids having 9 to 11 carbon atoms, vinyl chloride, ethylene, methacrylic acid, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, styrene, and 1,3-butadiene.

6. Method for producing the aqueous dispersions of copolymers of ethylenically unsaturated monomers and of ethylenically functionalized silicone resins according to any of Claims 1 to 5 by means of radically initiated miniemulsion polymerization in aqueous medium of

(A) one or more monomers from the group encompassing vinyl esters, (meth)acrylic esters, vinylaromatics, olefins, 1,3-dienes, vinyl ethers, and vinyl halides, and optionally further monomers copolymerizable therewith, in the presence of
(B) at least one silicone resin which is functionalized with ethylenically unsaturated, radically polymerizable groups and consists of siloxane units of the general formula

$$[R^1_p(OR^2)_zSiO_{(4-p-z)/2} \qquad (I),$$

where $R^1$ is identical or different and is a radical **R\*** or **E,** where

**R\*** is identical or different and is a hydrogen atom or is a hydrocarbon radical which is free from aliphatic multiple C-C bonds, has 1 to 18 carbon atoms, and may optionally be substituted, and
**E** is an ethylenically unsaturated radical of the formula $-(CR^5_2)_m-X$, where

m is an integer greater than or equal to 2,
$R^5$ is a hydrogen atom, a $C_1-C_{12}$ alkyl radical or a $C_6-C_{18}$ aryl radical, and
X is an ethylenically unsaturated organic group,

where $R^1$ is an ethylenically unsaturated radical E in at least 1 mol% and at most 50 mol% of all siloxane units (I) ,
$R^2$ is identical or different and is a hydrogen atom or a hydrocarbon radical having 1 to 18 carbon atoms,
p is 0, 1, 2 or 3, and
z is 0, 1, 2 or 3,

where the sum p + z has a value of 0, 1, 2 or 3,
with the proviso that for at least 20 mol% of all siloxane units of the formula (I) in the silicone resin (B), the sum p+z is 1 or 0, with p being 1 or 0 and z being 0,
the miniemulsion polymerization being carried out by preparation in the first step of a solution of at least one silicone resin (B) in one or more ethylenically unsaturated monomers (A), to give a silicone resin-in-monomer solution,
emulsification in the second step of the resulting silicone resin-in-monomer solution, using emulsifiers, optionally hydrophobic coemulsifiers, and optionally polymerization inhibitors which prevent premature radical emulsion polymerization, in water in such a way as to give a miniemulsion having a particle size D(50) of not more than 350 nm, preferably not more than 300 nm, more preferably not more than 250 nm, very preferably not more than 200 nm, and
subjection in the third step of the resulting miniemulsion to radical emulsion polymerization, where the miniemulsion polymerization is carried out using water-soluble or oil-soluble, or a mixture of water-soluble and oil-soluble, polymerization initiators.

7. Method according to Claim 6, **characterized in that** E is a radical of the formula $-(CH_2)_3-X$, where X is an ethylenically unsaturated organic group.

8. Method according to Claim 6 or 7, **characterized in that** X is an acrylic or methacrylic radical.

9. Method according to Claim 6, 7 or 8, **characterized in that** the radicals R* are at least two different radicals selected from the group of carbon-richer hydrocarbon radicals having 6 to 18 carbon atoms, preferably isooctyl radicals and phenyl radicals, and carbon-poorer radicals having 1 to 3 carbon atoms, preferably methyl radicals.

10. Method according to any of Claims 6 to 9, **characterized in that** ethylenically unsaturated monomers used are one or more monomers from the group of vinyl acetate, vinyl esters of $\alpha$-branched monocarboxylic acids having 9 to 11 carbon atoms, vinyl chloride, ethylene, methacrylic acid, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, styrene, and 1,3-butadiene.

11. Aqueous construction coating compositions comprising aqueous dispersions of copolymers according to any of Claims 1 to 5 or produced according to any of Claims 6 to 10.

12. Method for treating construction materials with aqueous construction coating compositions comprising aqueous dispersions of copolymers according to any of Claims 1 to 5 or produced according to any of Claims 6 to 10.

13. Method according to Claim 12, the construction material being wood.

**Revendications**

1. Dispersions aqueuses de copolymères de monomères éthyléniquement insaturés et de résines de silicone éthyléniquement fonctionnalisées pouvant être obtenus par polymérisation en mini-émulsion initiée par voie radicalaire en milieu aqueux de

(A) un ou plusieurs monomères du groupe comprenant les esters de vinyle, les esters de l'acide (méth)acrylique, les composés aromatiques de vinyle, les oléfines, les 1,3-diènes, les éthers de vinyle et les halogénures de vinyle, et éventuellement d'autres monomères copolymérisables avec ceux-ci,
en présence de

(B) au moins une résine de silicone, qui est fonctionnalisée avec des groupes éthyléniquement insaturés, polymérisables par voie radicalaire, et constituée d'unités siloxane de la formule générale

$$[R^1_p(OR^2)_z SiO_{(4-p-z)/2}] \qquad (I)$$

où les $R^1$ sont identiques ou différents, et signifient un radical **R\*** ou **E,** où

les **R\*** sont identiques ou différents, signifient un atome d'hydrogène, ou un radical hydrocarboné de 1 à 18 atomes C, exempt de liaisons C-C multiples aliphatiques, qui peut éventuellement être substitué, et
**E** signifie un radical éthyléniquement insaturé de la formule $-(CR^5_2)_m$-X,

où

m est un nombre entier supérieur ou égal à 2,
$R^5$ signifie un atome d'hydrogène, un radical alkyle en $C_1$-$C_{12}$ ou un radical aryle en $C_6$-$C_{18}$, et
X signifie un groupe organique éthyléniquement insaturé, où $R^1$ signifie un radical éthyléniquement insaturé E dans au moins 1 % en moles et au plus 50 % en moles de toutes les unités siloxane (I),

les $R^2$ sont identiques ou différents, et signifient un atome d'hydrogène ou un radical hydrocarboné de 1 à 18 atomes C,
p est 0, 1, 2 ou 3, et
z est 0, 1, 2 ou 3,
où la somme p + z présente la valeur 0, 1, 2 ou 3,
à condition que, pour au moins 20 % en moles de toutes les unités siloxane de la formule (I) dans la résine de silicone (B), la somme p + z soit de 1 ou 0, où p est 1 ou 0 et z est 0,
où la polymérisation en mini-émulsion est réalisée en ce que, dans la première étape, une solution d'au moins une résine de silicone (B) dans un ou plusieurs monomères éthyléniquement insaturés (A) est préparée, une solution de résine de silicone en monomère étant obtenue,
dans la deuxième étape, la solution de résine de silicone en monomère ainsi obtenue est émulsifiée dans de l'eau en utilisant des émulsifiants, éventuellement des co-émulsifiants hydrophobes, et éventuellement des inhibiteurs de polymérisation, qui empêchent la polymérisation en émulsion radicalaire prématurée, de telle sorte qu'une mini-émulsion ayant une taille de particule D(50) d'au plus 350 nm, avantageusement d'au plus 300 nm, de préférence d'au plus 250 nm, de manière particulièrement préférée d'au plus 200 nm est obtenue, et
dans la troisième étape, la mini-émulsion ainsi obtenue est soumise à une polymérisation en émulsion radicalaire, des initiateurs de polymérisation solubles dans l'eau ou solubles dans l'huile ou un mélange d'initiateurs de polymérisation solubles dans l'eau et solubles dans l'huile étant utilisés pour la réalisation de la polymérisation en mini-émulsion.

**2.** Dispersions aqueuses selon la revendication 1, **caractérisées en ce que**

E est un radical de la formule $-(CH_2)_3$-X,
où X signifie un groupe organique éthyléniquement insaturé.

**3.** Dispersions aqueuses selon la revendication 1 ou 2, **caractérisées en ce que** X est un radical acrylique ou méthacrylique.

**4.** Dispersions aqueuses selon la revendication 1, 2 ou 3, **caractérisées en ce que** les radicaux R\* sont au moins deux radicaux différents choisis dans le groupe des radicaux hydrocarbonés plus riches en carbone de 6 à 18 atomes C, de préférence des radicaux isooctyle et phényle, et des radicaux plus pauvres en carbone de 1 à 3 atomes C, de préférence des radicaux méthyle.

5. Dispersions aqueuses selon l'une quelconque des revendications 1 à 4, **caractérisées en ce qu'**un ou plusieurs monomères du groupe constitué par l'acétate de vinyle, les esters de vinyle d'acides monocarboxyliques $\alpha$-ramifiés de 9 à 11 atomes C, le chlorure de vinyle, l'éthylène, l'acide méthacrylique, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène et le 1,3-butadiène sont utilisés en tant que monomères éthyléniquement insaturés.

6. Procédé de fabrication des dispersions aqueuses de copolymères de monomères éthyléniquement insaturés et de résines de silicone éthyléniquement fonctionnalisées selon l'une quelconque des revendications 1 à 5 par polymérisation en mini-émulsion initiée par voie radicalaire en milieu aqueux de

(A) un ou plusieurs monomères du groupe comprenant les esters de vinyle, les esters de l'acide (méth)acrylique, les composés aromatiques de vinyle, les oléfines, les 1,3-diènes, les éthers de vinyle et les halogénures de vinyle, et éventuellement d'autres monomères copolymérisables avec ceux-ci,
en présence de
(B) au moins une résine de silicone, qui est fonctionnalisée avec des groupes éthyléniquement insaturés, polymérisables par voie radicalaire, et constituée d'unités siloxane de la formule générale

$$[R^1{}_p(OR^2)_z SiO_{(4-p-z)/2}] \qquad (I)$$

où les $R^1$ sont identiques ou différents, et signifient un radical **R\*** ou **E,** où

les **R\*** sont identiques ou différents, signifient un atome d'hydrogène, ou un radical hydrocarboné de 1 à 18 atomes C, exempt de liaisons C-C multiples aliphatiques, qui peut éventuellement être substitué, et
**E** signifie un radical éthyléniquement insaturé de la formule $-(CR^5{}_2)_m$-X,

où

m est un nombre entier supérieur ou égal à 2,
$R^5$ signifie un atome d'hydrogène, un radical alkyle en $C_1$-$C_{12}$ ou un radical aryle en $C_6$-$C_{18}$, et
X signifie un groupe organique éthyléniquement insaturé, où $R^1$ signifie un radical éthyléniquement insaturé E dans au moins 1 % en moles et au plus 50 % en moles de toutes les unités siloxane (I),

les $R^2$ sont identiques ou différents, et signifient un atome d'hydrogène ou un radical hydrocarboné de 1 à 18 atomes C,
p est 0, 1, 2 ou 3, et
z est 0, 1, 2 ou 3,
où la somme p + z présente la valeur de 0, 1, 2 ou 3, à condition que, pour au moins 20 % en moles de toutes les unités siloxane de la formule (I) dans la résine de silicone (B), la somme p + z soit de 1 ou 0, où p est 1 ou 0 et z est 0,
où la polymérisation en mini-émulsion est réalisée en ce que, dans la première étape, une solution d'au moins une résine de silicone (B) dans un ou plusieurs monomères éthyléniquement insaturés (A) est préparée, une solution de résine de silicone en monomère étant obtenue,
dans la deuxième étape, la solution de résine de silicone en monomère ainsi obtenue est émulsifiée dans de l'eau en utilisant des émulsifiants, éventuellement des co-émulsifiants hydrophobes, et éventuellement des inhibiteurs de polymérisation, qui empêchent la polymérisation en émulsion radicalaire prématurée, de telle sorte qu'une mini-émulsion ayant une taille de particule D(50) d'au plus 350 nm, avantageusement d'au plus 300 nm, de préférence d'au plus 250 nm, de manière particulièrement préférée d'au plus 200 nm est obtenue, et
dans la troisième étape, la mini-émulsion ainsi obtenue est soumise à une polymérisation en émulsion radicalaire, des initiateurs de polymérisation solubles dans l'eau ou solubles dans l'huile ou un mélange d'initiateurs de polymérisation solubles dans l'eau et solubles dans l'huile étant utilisés pour la réalisation de la polymérisation en mini-émulsion.

7. Procédé selon la revendication 6, **caractérisé en ce que**

E est un radical de la formule -$(CH_2)_3$-X,
où X signifie un groupe organique éthyléniquement insaturé.

8. Procédé selon la revendication 6 ou 7, **caractérisé en ce que** X est un radical acrylique ou méthacrylique.

9. Procédé selon la revendication 6, 7 ou 8, **caractérisé en ce que** les radicaux R* sont au moins deux radicaux différents choisis dans le groupe des radicaux hydrocarbonés plus riches en carbone de 6 à 18 atomes C, de préférence des radicaux isooctyle et phényle, et des radicaux plus pauvres en carbone de 1 à 3 atomes C, de préférence des radicaux méthyle.

10. Procédé selon l'une quelconque des revendications 6 à 9, **caractérisé en ce qu'**un ou plusieurs monomères du groupe constitué par l'acétate de vinyle, les esters de vinyle d'acides monocarboxyliques $\alpha$-ramifiés de 9 à 11 atomes C, le chlorure de vinyle, l'éthylène, l'acide méthacrylique, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène et le 1,3-butadiène sont utilisés en tant que monomères éthyléniquement insaturés.

11. Agent de revêtement de construction aqueux contenant des dispersions aqueuses de copolymères selon l'une quelconque des revendications 1 à 5 ou fabriquées selon l'une quelconque des revendications 6 à 10.

12. Procédé de traitement de matériaux de construction avec des agents de revêtement de construction aqueux contenant des dispersions aqueuses de copolymères selon l'une quelconque des revendications 1 à 5 ou fabriquées selon l'une quelconque des revendications 6 à 10.

13. Procédé selon la revendication 12, où le matériau de construction est du bois.

**IN DER BESCHREIBUNG AUFGEFÜHRTE DOKUMENTE**

**In der Beschreibung aufgeführte Patentdokumente**

- EP 1256611 A2
- EP 1197502 A2
- EP 943634 A1
- EP 1308468 A1
- EP 352339 A1
- EP 771826 A2
- US 5618879 A
- US 7674868 B2

**In der Beschreibung aufgeführte Nicht-Patentliteratur**

- **NACH FOX T. G.** *Bull. Am. Physics Soc.,* 1956, vol. 1 (3), 123
- **KEVIN MÜLLER.** *Nicht-wässrige Emulsionspolymerisationen,* 2008, 17-20